(19) Europäisches Patentamt / European Patent Office / Office européen des brevets

(11) **EP 4 330 962 B1**

(12) **EUROPEAN PATENT SPECIFICATION**

(45) Date of publication and mention
of the grant of the patent:
**21.05.2025 Bulletin 2025/21**

(21) Application number: **21755954.1**

(22) Date of filing: **06.08.2021**

(51) International Patent Classification (IPC):
$G10L\ 19/00\ ^{(2013.01)}$  $G06N\ 3/045\ ^{(2023.01)}$
$G06N\ 3/0464\ ^{(2023.01)}$  $G06N\ 3/0475\ ^{(2023.01)}$
$G06N\ 3/048\ ^{(2023.01)}$  $G06N\ 3/094\ ^{(2023.01)}$
$G10L\ 25/30\ ^{(2013.01)}$

(52) Cooperative Patent Classification (CPC):
**G10L 19/00; G06N 3/045; G06N 3/0464;
G06N 3/0475; G06N 3/048; G06N 3/094;**
G10L 25/30

(86) International application number:
**PCT/EP2021/072091**

(87) International publication number:
**WO 2022/228704 (03.11.2022 Gazette 2022/44)**

(54) **DECODER**

DECODER

DÉCODEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.04.2021 EP 21170782**

(43) Date of publication of application:
**06.03.2024 Bulletin 2024/10**

(60) Divisional application:
**25164583.4**

(73) Proprietor: **Fraunhofer-Gesellschaft zur
Förderung
der angewandten Forschung e.V.
80686 München (DE)**

(72) Inventors:
• **AHMED, Ahmed Mustafa Mahmoud**
**91058 Erlangen (DE)**
• **PIA, Nicola**
**91058 Erlangen (DE)**
• **BÜTHE, Jan**
**91058 Erlangen (DE)**
• **KORSE, Srikanth**
**91058 Erlangen (DE)**
• **GUPTA, Kishan**
**91058 Erlangen (DE)**
• **MULTRUS, Markus**
**91058 Erlangen (DE)**
• **FUCHS, Guillaume**
**91058 Erlangen (DE)**

(74) Representative: **Zuccollo, Alberto et al
Schoppe, Zimmermann, Stöckeler
Zinkler, Schenk & Partner mbB
Radlkoferstraße 2
81373 München (DE)**

(56) References cited:
US-A1- 2019 180 732    US-A1- 2020 176 004
US-A1- 2021 074 308

## Description

### Technical field

The invention is within the technical field of audio decoding and generation. For example, there is disclosed a streamwise generative adversarial network (GAN) vocoder, e.g. usable for real-time wideband speech coding at very low bit-rate.

Embodiments of the invention refer to an audio decoder or generator, configured to decode or generate an audio signal from an input signal and a bitstream, the bitstream representing the audio signal. Further embodiments refer to methods for decoding or generating an audio signal, and methods for training an audio decoder or generator. Further embodiments refer to a computer program product.

### Background

Neural vocoders have proven to outperform classical approaches in the synthesis of natural high-quality speech in many applications, such as text-to-speech, speech coding, and speech enhancement. The first groundbreaking generative neural network to synthesize high-quality speech was WaveNet [1], and shortly there-after many other approaches were developed [2, 3]. These models offer state-of-the-art quality, but often at a very high computational cost and very slow synthesis. An abundance of models generating speech with lowered computational cost was presented in the recent years. Some of these are optimized versions of existing models, while others leverage the integration with classical methods [4]. Be-sides, many completely new approaches were also introduced, often relying on GANs.

Existing solutions combining speech coding and neural vocoders are:

- LPCNet (Mozilla, JM Valin) [2]:

  - Bit-rate: 1.6 kbps
  - Speech features: MFCCs, pitch lag, and normalized correlation (harmonicity)
  - Delay: ~60ms
  - Neural Vocoder: Auto-regressive generate Net, generating excitation of LPC analysis, based on WaveRNN
  - Complexity: several GFLOPs, no suitable for inference on GPU.
  - Quality: Ok for clean speech, hard to generalize to other classes of signal (noisy, reverberant speech)
  - Pros: relatively low complexity for CPUs
  - Cons: inflexible model, hard for extend and to generatlize

- Lyra (Google) [3]:

  - Bit-rate: 3kbps
  - Application: VoIP on weak/old networks
  - Speech features: stack of log mel-spectra
  - Delay: ~60ms
  - Neural Vocoder: Auto-regressive generate Net, multi-band WaveRNN
  - Complexity: suitable for inference in CPUs, not on GPU.
  - Quality: Ok for clean speech but with birdies, noisy speech needs to be denoised in a pre-processing step.

- Disadvantages of prior art:

  - Delay coming from coding/extracting of speech features is high
  - Can't take advantage of GPU during the generation
  - Quality limited due to auto-regressive generative Nets. GAN are now doing better.

GAN can't be directly used in speech coding application. The present invention aims to address this challenge.

US 2021/074308 A1 discloses an artificial-intelligence-based audio coding technique.

### Summary of the techniques

The invention is defined in the independent claims.

## Brief Description of the Figures

Embodiments according to the present invention will subsequently be described taking reference to the enclosed figures in which:

Fig. 1 shows an example coding system.

Fig. 2 (divided among Figs. 2a and 2b) shows operations that can be performed.

Fig. 3 shows a block for a decoder according to an example.

Fig. 4 shows a decoder (generator) according to an example.

Figs. 5a, 5b, 6a, and 6b show the results of comparisons between the present examples and conventional techniques.

Fig. 7 shows a general example of a decoder.

Fig. 7a shows another example of a decoder.

Fig. 7b shows another example of a decoder.

Figs. 8a and 8b and 8c show schematizations of techniques of a decoder according to an example.

Fig. 9 shows an example of the processing according to an example.

Fig. 10 shows an example of discriminator of a decoder according to an example.

Figs. 11a and 11b show examples of decoders.

Fig. 12 shows a synoptic table for embodiments of the invention when relating to TTS applications.

In the figures, similar reference signs denote similar elements and features.

## Detailed Description of the Embodiments

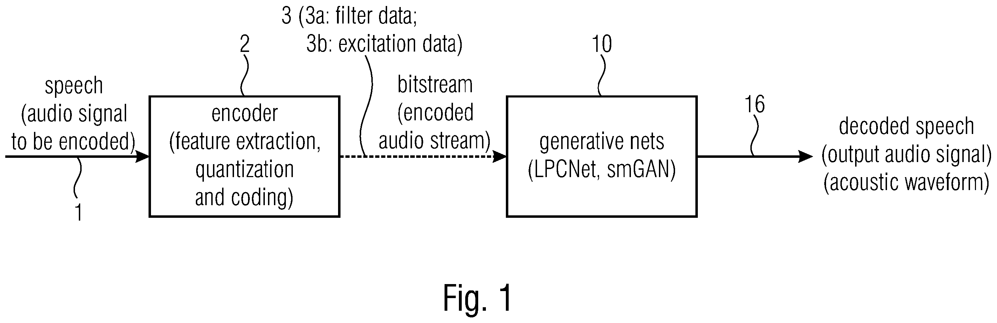

Fig. 1 shows an example of a vocoder system in which an audio signal 1 is encoded and an output audio signal 16 is decoded. In general, the audio signal is here considered to be speech (but could also be other kind of sound). The audio signal 1 is encoded by an encoder 2 to obtain a bitstream 3 (which may include data 3a and 3b, see below). The encoder 2 may be an LPC (linear prediction coding) encoder, or Spectrogrum-based coder or Cepstrum-based coder. The bitstream 3 may include several parameters associated to the audio signal 1 (and to the audio signal to be generated at the decoder). The bitstream 3 may be compressed with respect to the original version of the audio signal 1. The bitstream 3 is decoded by a decoder 10. The decoder 10 may also be considered as an audio generator, since it generates the audio signal 16 which in general shall be a representation of the original audio signal 1 and of the bitstream 3. The decoder 10 is discussed in great detail below.

Here, the architecture of the encoder 2 is not restricted. The encoder 2 may perform operations like feature extraction, quantization and coding which are per se known. The bitstream 3 includes some parameters. The encoder 2 may be a straightforward, normal LPC encoder and the bitstream 3 may therefore an LPC bitstream. Below in table 1, a possible allocation of bits for the bitstream 3 is provided. LPC coding is a known coding technique according towhich parameters are provided which include filter data (e.g. formant data) and excitation data (or stimulus data).

The encoder 2 may estimate the formants through by minimizing a prediction error power and estimating an auto-regressive (AR) model with for example the autocorrelation-based by optimizing the Yule-Walker equation system with for example the recursive method Levinson-Durbin and obtain parameters associated to the formants (filter data 3a). As an alternative, the spectral envelope and the format structure can be directly computed in frequency domain by smoothing the spectrum magnitudes or computed energy in frequency subbands. In parallel, the encoder 2 may subtract the formants by inverse filtering of the AR model for example (also known as LPC analysis filter) from the audio signal 1 and also obtain residual parameters (excitation data 3b). The filter parameters or data 3a may be understood as representing a filter generated by the positions taken by the muscles of the human mouth, which modify the excitation (represented by the excitation data 3b) consisting of the air flow passed through or stopped by the glottis. Basically, the LPC encoder 2 encodes the human voice by taking into account the physiology of the human voice production. In general, the LPC decoder 10 may obtain both the filter data 3a and the other data 3b (e.g. excitation data, pitch data...) from the bitstream 3 and use them for generating the audio signal 16. In particular, the other data (e.g. excitation data 3b) are decoded and reconstructed, and the filter data or spectral envelope data 3a are used for filtering (e.g., through a 16th-order prediction coefficient). The cepstrum is another representation of the speech, which decomposes into a sum a convolution that means a filtered signal. The filter data or spectral envelope data 3a and the excitation data (or more in general the other data 3b) can be deduced easily in such a domain. The first coefficients (MFCCs) of the cepstrum represent the spectral envelope and the formantic structure, and are called in the subsequent text, the cepstrum data. The cepstrum data can be seen as representing the filter coefficients of AR/MA system with zeros and poles. From the cepstrum data it is possible to obtain filter data or spectral envelope data 3a and/or the other data 3b (e.g. excitation data, pitch data etc.). Here, the encoder 2 may be a LPC encoder, spectrogram-based encoder, cepstrum-based encoder, etc.

It has been understood that it is possible to decode a bitstream like the bitstream 3 according to the LPC technique, spectrogram-based technique, cepstrum-based technique, etc., for generating audio signal 16 properly, in particular, by using learnable techniques (such as neural network techniques), and in particular using generative neural networks.

In general terms, the bitstream 3 (whether encoded though LPC, a spectrogram-based technique, a cepstrum-based technique, or another technique) may include, in some examples:

- filter data (e.g. spectral envelope data) 3a; and/or
- other data 3b, e.g. pitch data (e.g. pitch lag data) and/or at least one of excitation data stimulus data, residual data, stimulus data, excitation data, harmonicity data, periodicity data, long-term prediction data.

The filter data 3a may include Mel-frequency cepstrum or cepstral coefficients (MFCCs) data, even though other types of filter data (e.g. spectral envelope data) may be adopted.

Among the other data 3b, they may comprise the pitch data (e.g., pitch lag of the audio signal 1). For example, the pitch data may include the pitch correlation (e.g. encoded in 2 bits) and/or pitch correlation (e.g. encoded in 6 bits). See, for example, Table 1 below.

Here below, the written proposed technique of an audio decoder for decoding a bitstream (e.g. 3) representing the audio signal (e.g. 1, 16), the audio signal being subdivided in a sequence of frames, the audio decoder (e.g. 10) comprising:

a first data provisioner (e.g. 702) configured to provide, for a given frame, first data (e.g. 15) derived from an input signal (e.g. 14) from an external or internal source or from the bitstream (e.g. 3), wherein the first data (e.g. 15) has multiple channels;
a first processing block (e.g. 40, 50, 50a-50h), configured, for the given frame, to receive the first data (e.g. 15) and to output first output data (e.g. 69) in the given frame, wherein the first output data (e.g. 69) comprises a plurality of channels (e.g. 47), and
a second processing block (e.g. 45), configured, for the given frame, to receive, as second data, the first output data (e.g. 69) or data derived from the first output data (e.g. 69),
the first processing block (e.g. 50) comprising:

at least one preconditioning (learnable) layer (e.g. 710, 710b, 710c) configured to receive the bitstream (e.g. 3) and, for the given frame, output target data (e.g. 12) representing the audio signal (e.g. 16) in the given frame with multiple channels and multiple samples for the given frame;
at least one conditioning learnable layer (e.g. 71, 72, 73) configured, for the given frame, to process the target data (e.g. 12) to obtain conditioning feature parameters (e.g. 74, 75) for the given frame; and
a styling element (e.g. 77), configured to apply the conditioning feature parameters (e.g. 74, 75) to the first data (e.g. 15, 59a) or normalized first data (e.g. 59, 76'); and

wherein the second processing block (e.g. 45) is configured to combine the plurality of channels (e.g. 47) of the second data (e.g. 69) to obtain the audio signal (e.g. 16).

There is also proposed a method for decoding an audio signal (e.g. 1, 16) from a bitstream (e.g. 3) representing the audio signal (e.g. 16), the method using an input signal (e.g. 14), the audio signal (e.g. 1, 16) being subdivided into a plurality of frames, the method comprising:

from the bitstream (e.g. 3), obtaining target data (e.g. 15) for a given frame, by at least one (learnable) preconditioning layer (e.g. 710, 710b, 710c) of a first processing block, the target data (e.g. 15) representing the audio signal (e.g. 16) and having two dimensions;

receiving, by the first processing block (e.g. 50, 50a-50h) and for each sample of the given frame, first data (e.g. 12) derived from the input signal (e.g. 14);

processing, by a conditioning set of learnable layers (e.g. 71, 72, 73) of the first processing block (e.g. 50), the target data (e.g. 12) to obtain conditioning feature parameters (e.g. 74, 75); and

applying, by a styling element (e.g. 77) of the first processing block (e.g. 50), the conditioning feature parameters (e.g. 74, 75) to the first data (e.g. 15, 59) or normalized first data (e.g. 76');

outputting, by the first processing block (e.g. 50), first output data (e.g. 69) comprising a plurality of channels (e.g. 47);

receiving, by a second processing block (e.g. 45), as second data, the first output data (e.g. 69) or data derived from the first output data (e.g. 69); and

combining, by the second processing block (e.g. 45), the plurality of channels (e.g. 47) of the second data to obtain the audio signal (e.g. 16).

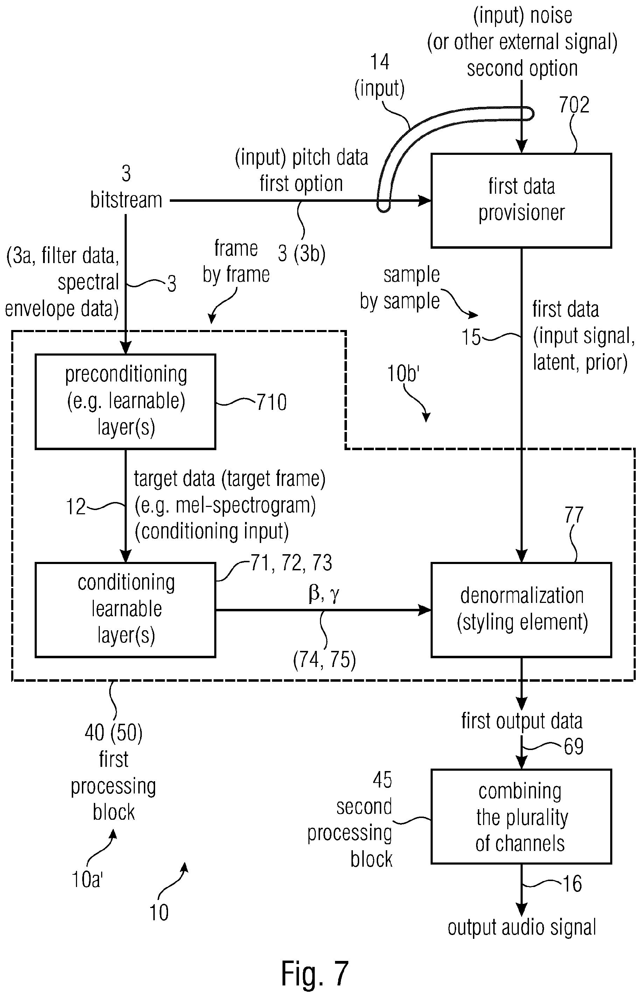

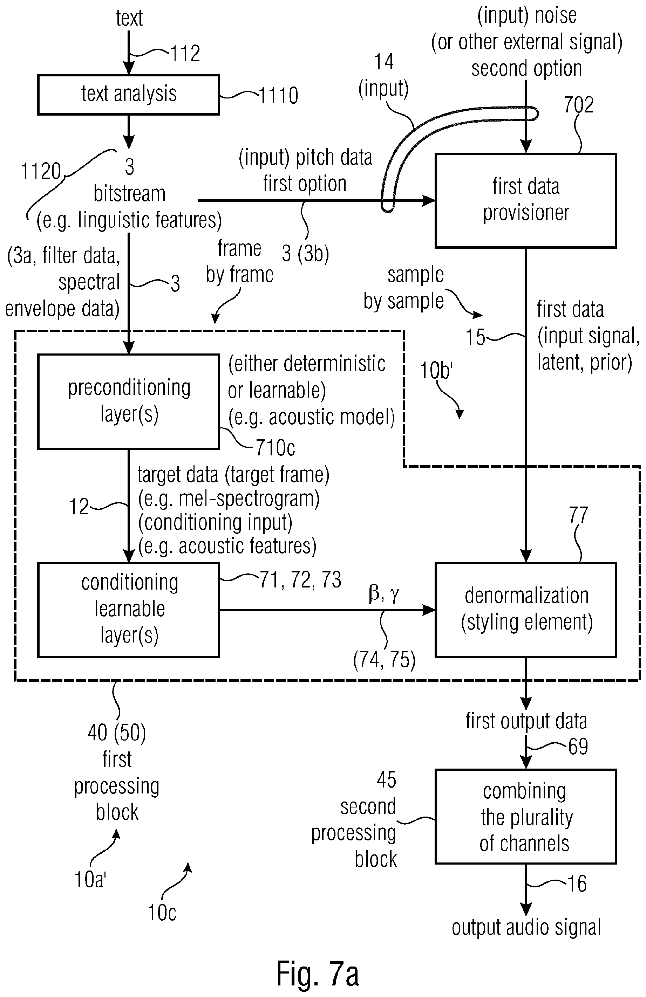

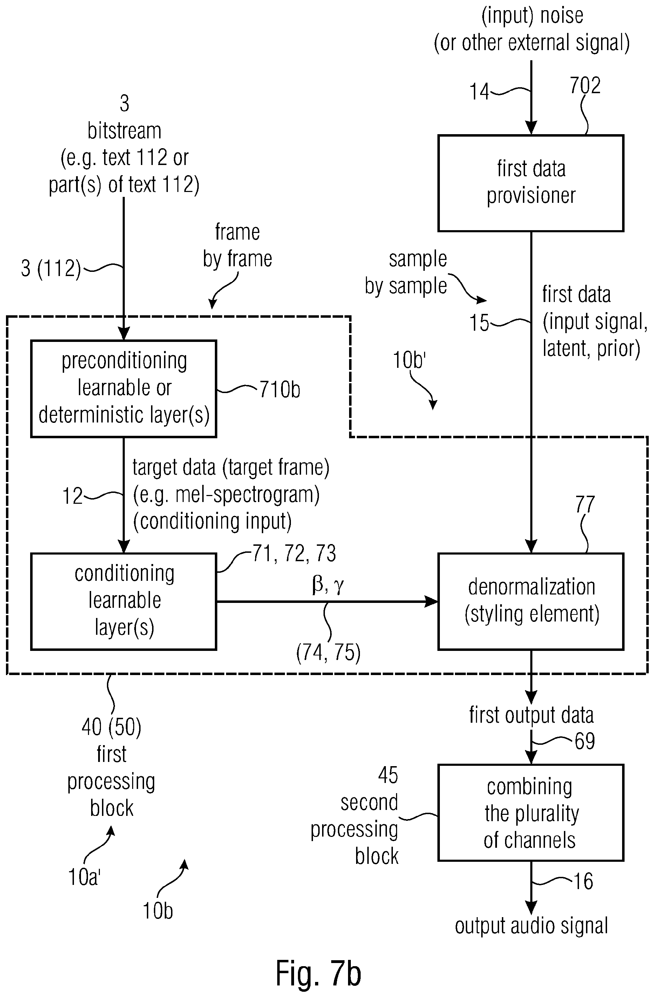

Fig. 7 shows an example of the decoder (generator) 10 (other examples are provided in Figs. 7a and 7b). The bitstream 3 comprises filter data (e.g. spectral envelope data) 3a and other data 3b (e.g. pitch data, and/or at least one of excitation data stimulus data, residual data, stimulus data, excitation data, harmonicity data, periodicity data, long-term prediction data). The other data 3b may be used in a first processing block 40 for generating first output data 69 (second data). The first output data 69 is in a plurality of channels. The first output data 69 is provided to a second processing block 45 which combines the plurality of channels of the first output data 69 providing an output audio signal 16 in one signal channel.

It is to be noted that, in general, the audio signal 16 (as well as the original audio signal 1 and its encoded version, the bitstream 3) are subdivided according to a sequence of frames (in some examples, the frames do not overlap with each other, while in some other examples they may overlap). Each frame includes a sequence of samples. For example, each frame may be subdivided into 16 samples (but other resolutions are possible). A frame can be long, for example, 10 ms (in other cases 5 ms or 20 ms or other time lengths may be used), while the sample rate may be for example 16kHz (in other case 8kHz, 32kHz or 48kHz, or any other sampling rates), and the bit-rate for example, 1.6 kbps (kilobit per second). It is also noted that the multiple frames may be grouped in one single packet, e.g., for transmission or for storage. While the time length of one frame is in general considered fixed, the number of samples per frame may vary, and upsampling operations may be performed.

The decoder 10 may make use of:

- a frame-by-frame branch 10a', which may be updated for each frame, e.g. using the filter data 3a of the bitstream 3; and/or
- a sample-by-sample branch 10b'.

The sample-by-sample branch 10b may be updated for each sample at the output sampling rate and/or for each sample at a lower sampling-rate than the final output sampling-rate, e.g. using the excitation data or pitch data 3b or another input, e.g. noise 14 or another input taken from an external or internal source.

It is also to be noted that the bitstream 3 is here considered to encode mono signals and also the output audio signal 16 and the original audio signal 1 are considered to be mono signals. In the case of stereo signals or multi-channel signals like loudspeaker signal or Ambisonics signal for example, then all the techniques here are repeated for each audio channel (in stereo case, there are two input audio channels 1, two output audio channels 16, etc.).

In this document, when referring to "channels", it has to be understood in the context of convolutional neural networks, according to which a signal is seen as an activation map which has at least two dimensions:

- a plurality of samples (e.g., in an abscissa dimension, or e.g. time axis); and
- a plurality of channels (e.g., in the ordinate direction, or e.g. frequency axis).

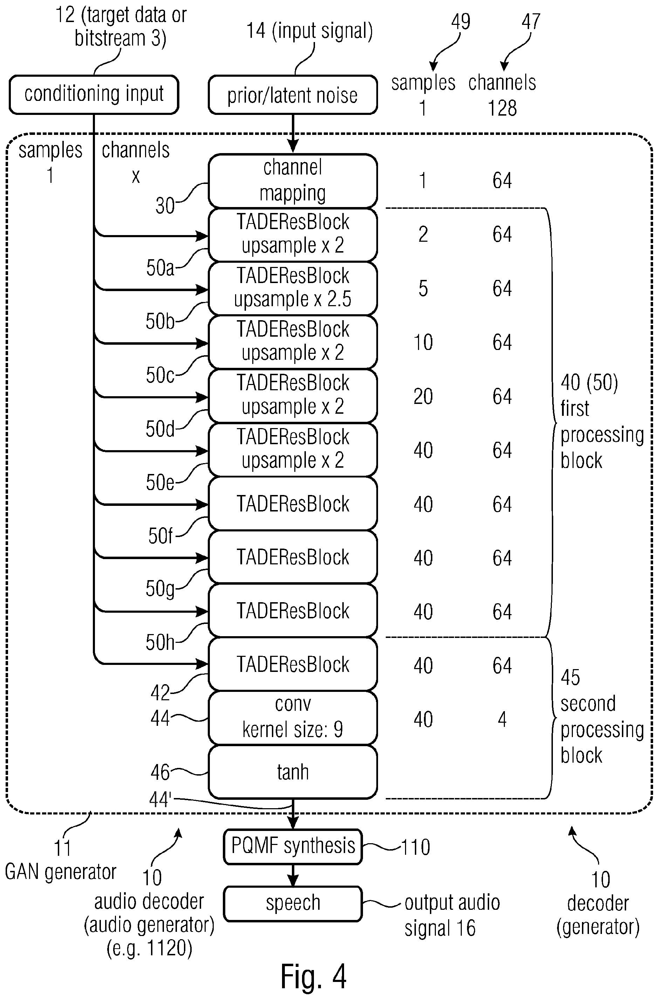

The first processing block 40 may operate like a conditional network, for which data from the bitstream 3 (e.g. filter data 3a, e.g. spectral envelope data) are provided for generating conditions which modify input data 14 (input signal). The input data 14 (in any of its evolutions) will be subjected to several processings, to arrive at the output audio signal 16, which is intended to be a version of the original audio signal 1. Both the conditions, the input data 14 and their subsequent processed versions may be represented as activation maps which are subjected to learnable layers, e.g. by convolutions. Notably, during its evolutions towards the speech 16, the signal is subjected to an upsampling (e.g. from 1 sample to thousands of samples in Fig. 4), but its number of channels is reduced (e.g. from 128 channels to 1 single channel in Fig. 4).

In the sample-by-sample branch 10b, first data 15 may be obtained, for example, from the data encoded in the bitstream 3 such as the filter data (e.g. spectral envelope data) 3a ("first option"), from another input (such as noise or a signal from an external signal) ("second option"), or from other internal or external source(s). The first data 15 may be considered the input of the first processing block 40 and may be an evolution of the input signal 14 (or may be the input signal 14). The first data 15 may be considered, in the context of conditional neural networks, as a latent signal or a prior signal. Basically, the first data 15 is modified according to the conditions set by the first processing block 40 to obtain the first output data 69. The first data 15 is in multiple channels, but in one single sample. Also, the first data 15 as provided to the first processing block 40 may have the one sample resolution, but in multiple channels. The multiple channels may form a set of parameters, which may be associated to the coded parameters encoded in the bitstream 3. During the processing in the first processing block 40 the number of samples per frame increases from a first number to a second, higher number (i.e. the bitrate increases from a first bitrate to a second, higher bitrate). On the other side, the number of channels may be reduced from a first number of channels to a second, lower number of channels. The conditions used in the first processing block (which are discussed in great detail below) can be indicated with 74 and 75 and are generated by target data 12, which in turn are obtained from the bitstream (e.g., from filter data, such as spectral envelope data) 3a. It will be shown that also the conditions 74 and 75, and/or the target data 12 may be subjected to upsampling, to conform (e.g. adapt) to the dimensions of the versions of the target data 12. The unit that provides the first data 15 (either from an internal source, an external source, the bitstream 3, etc.) is here called first data provisioner 702.

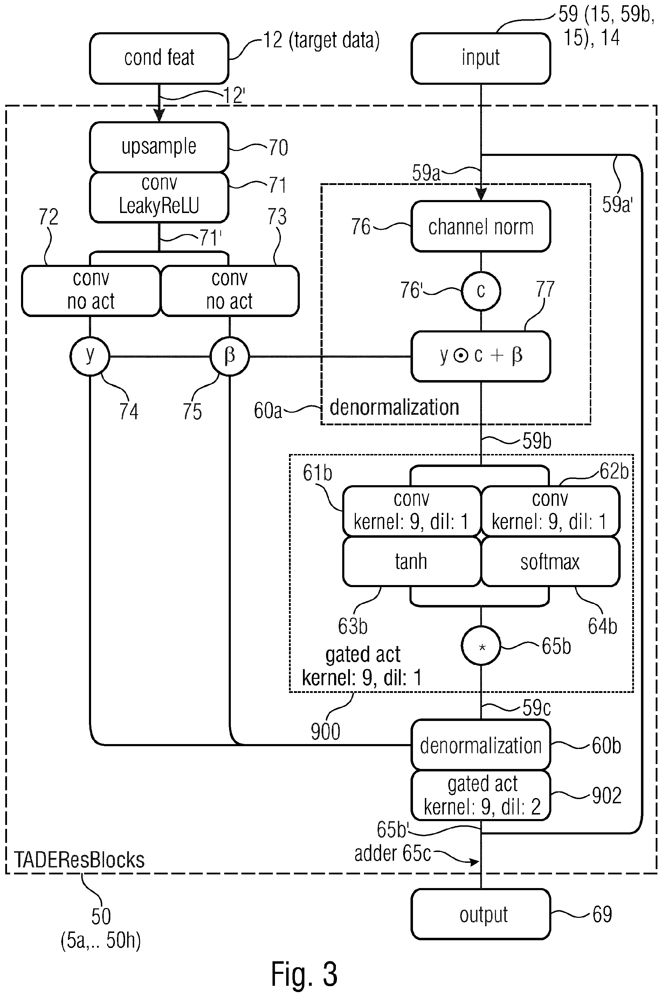

As can be seen from Fig. 7, the first processing block 40 includes a preconditioning learnable layer 710. The preconditioning learnable layer 710 generate target data 12 for each frame. The target data 12 is at least 2-dimensional: there are multiple samples for each frame in the abscissa direction and multiple channels for each frame in the ordinate direction. The target data 12 may be in the form of a spectrogram, which may be a mel-spectrogram, e.g. in case the frequency scale is non-uniform and is motivated by perceptual principles. In case the sampling rate corresponding to conditioning learnable layer to be fed is different from the frame rate, the target data 12 may be the same for all the samples of the same frame at a layer sampling rate. Another up-sampling strategy can also be applied. The target data 12 are provided to at least one conditioning learnable layer, which is here indicated as having the layer 71, 72, 73 (also see Fig. 3 and the discussion below). The conditioning learnable layer(s) 71, 72, 73 generate(s) conditions (some of which may be indicated as $\beta$ and $\gamma$ or the numbers 74 and 75), which are also called conditioning feature parameters to be applied to the first data 15, and any upsampled data derived from the first data. The conditioning learnable layer(s) 71, 72, 73 may be in the form of matrixes with multiple channels and multiple samples for each frame. The first processing block 40 may include a denormalization (or styling element) block 77. For example, the styling element 77 applies the conditioning feature parameters 74 and 75 to the first data 15. An example may be element wise multiplication of the values of the first data by the condition $\beta$ (which may operates as bias) and an addition with the condition $\gamma$ (which may operate as multiplier). The styling element 77 may produce a first output data 69 sample by sample.

The decoder 10 includes a second processing block 45. The second processing block 45 combines the plurality of channels of the first output data 69, to obtain the output audio signal 16.

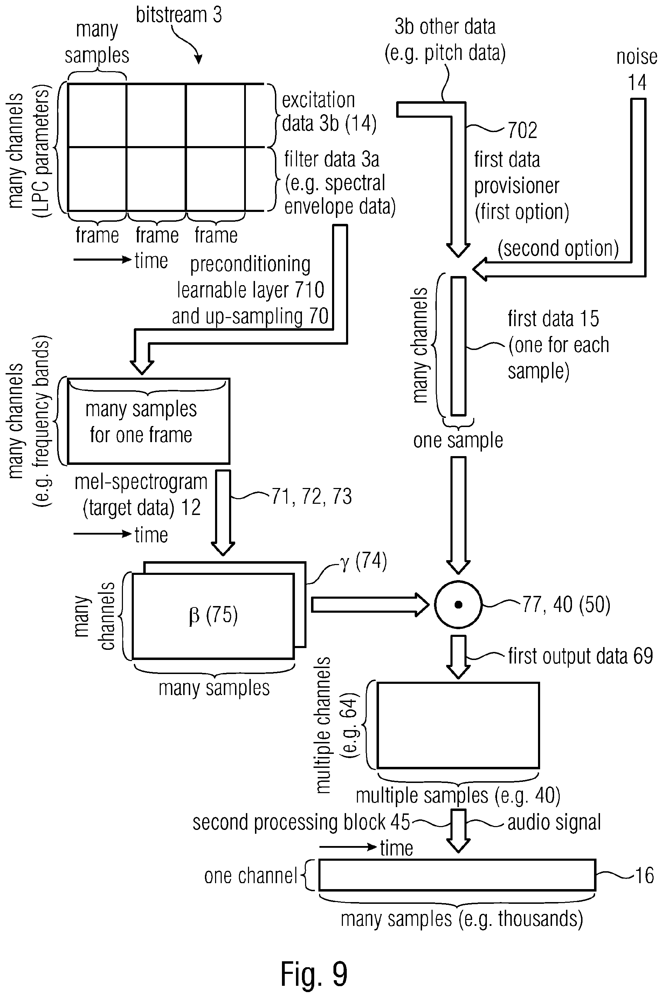

Reference is now mainly made to Fig. 9. A bitstream 3 is subdivided onto a plurality of frames (here three frames are shown). Time evolves from left to right. Each frame is subdivided into a plurality of samples (not shown) in the abscissa direction. In the ordinate direction, many channels are provided, which may include LPC parameters. The LPC parameters may include excitation data 3b (e.g., pitch data, correlation data, residual data, stimulus data) and filter data 3a (e.g., spectral envelope data), such as MFCCs. The filter data 3a (or more in general data from the bitstream 3) may be used by the preconditioning learnable layer(s) 710 to generate a spectrogram (e.g., a mel-spectrogram) or, more in general, target data 12. The target data 12 may represent one single frame and evolve, in the abscissa direction (from left to right) with time. Several channels may be in the ordinate direction for each frame. For example, different coefficients will take place in different entries of each column in association with coefficients associated with the frequency bands. Conditioning learnable layer(s) 71, 72, 73, conditioning feature parameter(s) 74, 75 ($\beta$ and $\gamma$) are present. The abscissa of $\beta$ and $\gamma$ is associated to different samples, while the ordinate is associated to different channels. In parallel, the first data provisioner 702 may provide the first data 15. A first data 15 may be generated for each sample and may have many channels. At the styling element 77 (and more in general, at the first conditioning block 40) the conditioning feature parameters $\beta$ and $\gamma$ (74, 75) may be applied to the first data 15. For example, an element-by-element multiplication may be performed between a column of the styling conditions 74, 75 (conditioning feature parameters) and the first data 15 or an evolution thereof. It will be shown that this process may be reiterated many times. Summarizing, the preconditioning learnable layer(s) 710 may obtain a filter data 3a associated to a frame and output a spectrogram for that frame.

As clear from above, the first output data 69 generated by the first processing block 40 may be obtained as a 2-dimensional matrix (or even a matrix with more than two dimensions) with samples in abscissa and channels in ordinate. At the second processing block 45, the audio signal 16 is generated having one single channel and multiple samples. More in general, at the second processing block 45, the number of samples per frame (bitrate) of the first output data 69 may evolve from the second number of samples per frame (second bitrate) to a third number of samples per frame (third bitrate), higher than the second number of samples per frame (second bitrate). On the other side, the number of channels of the first output data 69 may evolve from a second number of channels to a third number of channels, which is less than the second number of channels. Said in other terms, the bitrate (third bitrate) of the output audio signal 16 is higher than the bitrate of the first data 15 (first bitrate) and of the bitrate (second bitrate) of the first output data 69, while the number of channels of the output audio signal 16 is lower than the number of channels of the first data 15 (first number of channels) and of the number of channels (second number of channels) of the first output data 69

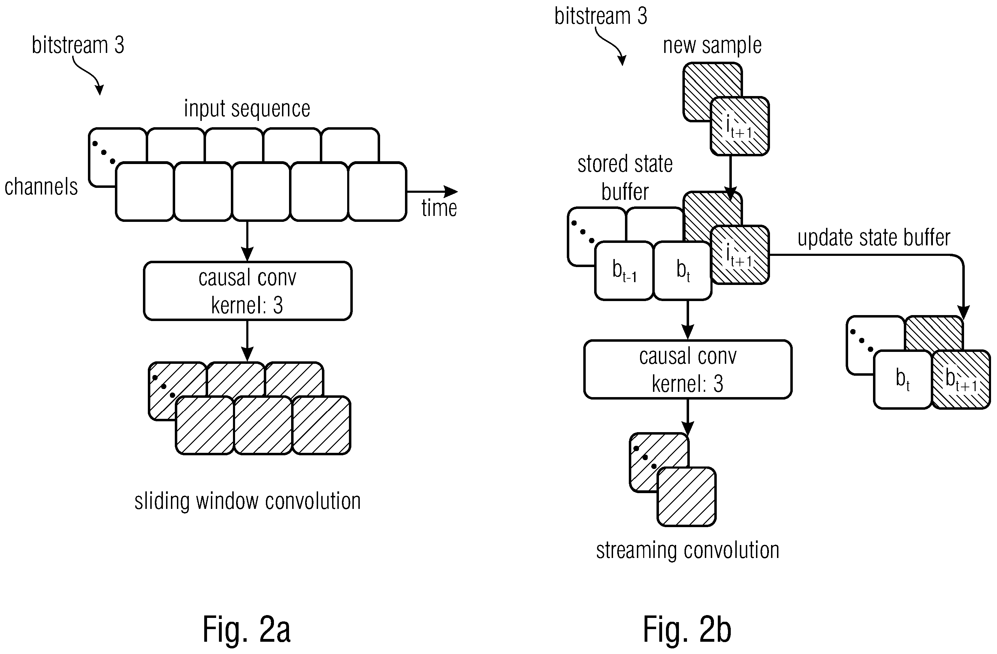

It will be shown that many of the present techniques may make use of convolutional neural networks (or other learnable layers) which are adapted for streaming techniques. Fig. 2a shows an example of a convolution operation using a 3x3 convolutional kernel which, for example, may slide from left to right different sets of coded parameters according to a "sliding convolution". Each set of coded parameters of the bitstream 3 may be associated to one single frame. The input sequence may, for example, include multiple parameters juxtaposed with each other in the ordinate direction. The convolutional kernel, therefore, may slide from left to right to obtain a convolutional output. From that, a dense neural network layer may be obtained. We may imagine that in the input sequence, there may be either excitation data 3b or filter data 3a, or both.

Fig. 2b shows a set of coded parameters of the bitstream 3 which are obtained in different times for different frames (frame $b_{t-1}$ obtained before frame $b_t$, which is obtain before frame $i_{t+1}$). At time t+1, a new set of coded parameters $i_{t+1}$ (e.g., LPC coefficients for one frame) is juxtaposed to a set of coded parameters including $b_{t-1}$ and $b_t$ previously juxtaposed to each other. A convolution may be directly obtained from the newly arrived set of coded parameters and the two proceeding sets of coded parameters, so as to obtain, in state 2i, a convolutional value valid for the last sets of coded parameters (e.g., the last three frames). After that, a dense convolutional layer may be obtained. The buffer may be updated with the frames $b_{t-1}$ and $b_t$.

The models processing the of coded parameters frame-by-frame by juxtaposing the current frame to the previous frames already in the state are also called streaming or stream-wise models and may be used as convolution maps for convolutions for real-time and streamwise applications like speech coding.

Examples of convolutions are discussed here below and it can be understood that they may be used at any of the preconditional learnable layers 710, at least one conditional learnable layers 71, 72, 73, and more in general, in the first processing block 40 (50). In general terms, the arriving set of conditional parameters (e.g., for one frame) is stored in a queue (not shown) to be subsequently processed by the first or second processing block while the first or second processing block, respectively, processes a previous frame.

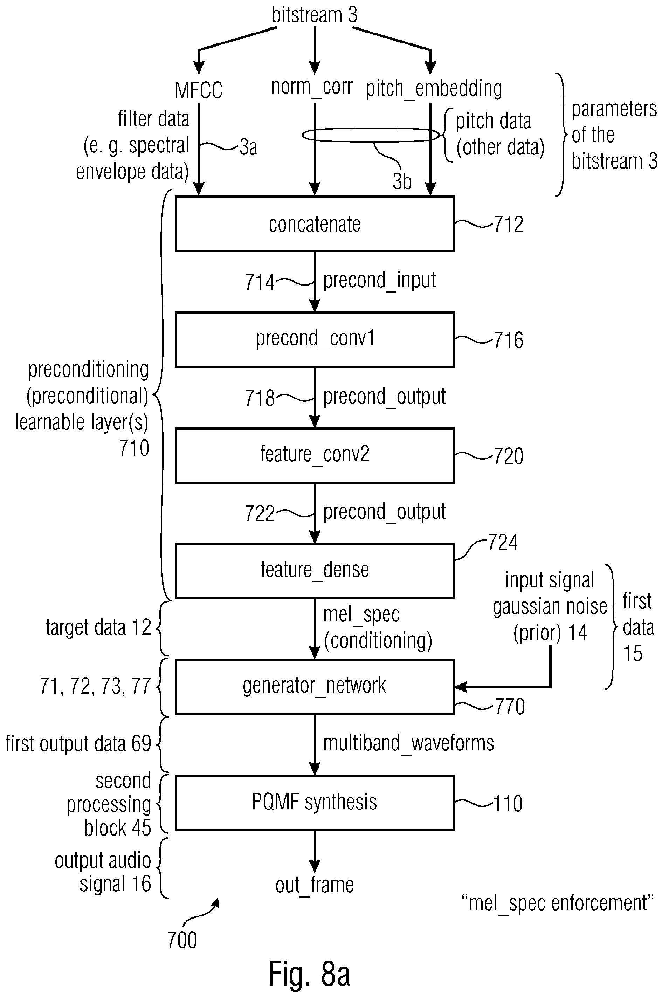

Fig. 8a shows a schematization 700 that can be used for implementing the present techniques. The so-called "spectrogram enforcement" technique can be used (see also below, in section 4.1 below). The preconditional learnable layer(s) 710 may include at least a concatenation step 712 in which LPC parameters (or more in general, parameters) of the bitstream 3 are concatenated through each other. The LPC parameters may include both filter data 3a (such as mfcc, Mel-frequency cepstrum, coefficients) and other data data 3b (such as pich data, e.g. normalized correlation and pitch). For example, the operations shown in Fig. 2b may be used by juxtaposing several parameters associated to different frames (e.g., consecutive frames). The output 714 of the concatenation 712 may be input to a preconditional convolution 716, which may provide an output 718 which a preconditional output. The preconditional output 718 may be input to a feature convolution 720, which may provide a preconditional output 722. Subsequently, a dense layer 724 may be provided, to obtain a spectrogram (e.g., a mel-spectrogram), which is target data 12. Other strategies may be used.

The generator network 770 of Fig. 8a may play the role of the conditional learnable layer(s) 71, 72, 73 and the denormalization (styling element) block 77. The output of the generator network 770 may be the first output data 69 and may be constituted by multiple waveforms. After that, the second processing block 45 may perform a synthesis (e.g., a PQMF synthesis) 110 from which an input audio signal 16 is obtained.

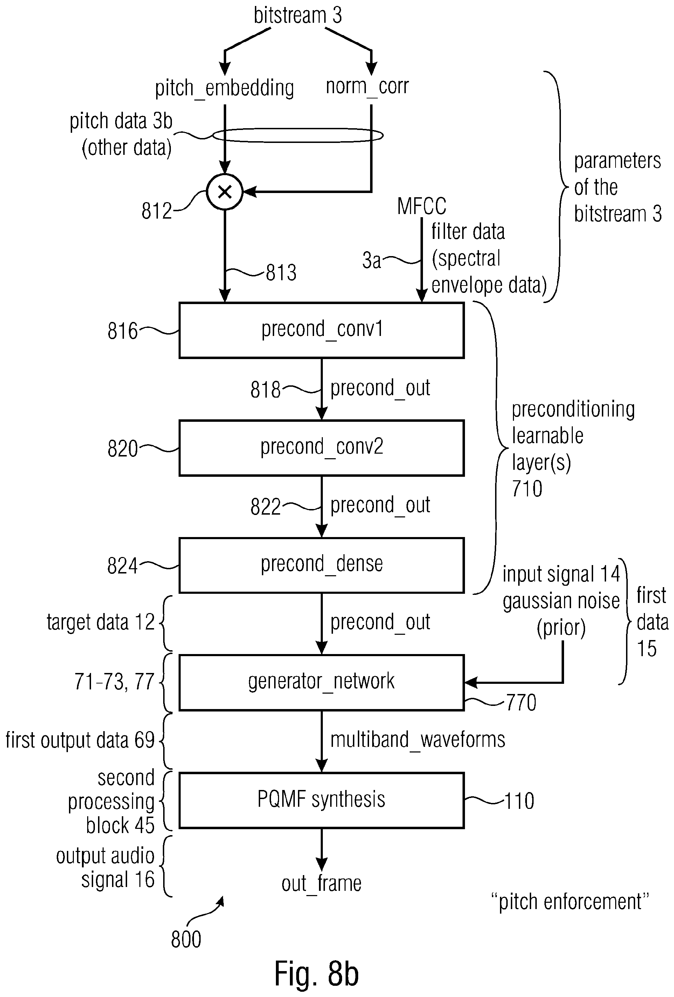

Fig. 8b shows another schematization 800 (a code being disclosed below in section 4.2). The schematization 800 may include at least one preconditional learnable layer(s) 710 may include a first preconditional layer 816, which may output a preconditional output 818. The preconditional output 818 may be input to a second preconditional layer 820 which may output a preconditional output 822. A preconditional dense layer 824 may be input with the preconditional output 822. The output of the preconditional dense layer 824 may be the target data 12 discussed above (e.g. a spectrogram, mel-spectrogram, etc.). A generator network layer 770 may play the role of layer(s) 71, 72, 73 and 77 (see above and below). A first output data 69 may be generated, e.g., in the form of multiple waveforms. After that, a second processing block 45 may be used. The output audio signal 16 (which in an output frame) is therefore generated and can be playback.

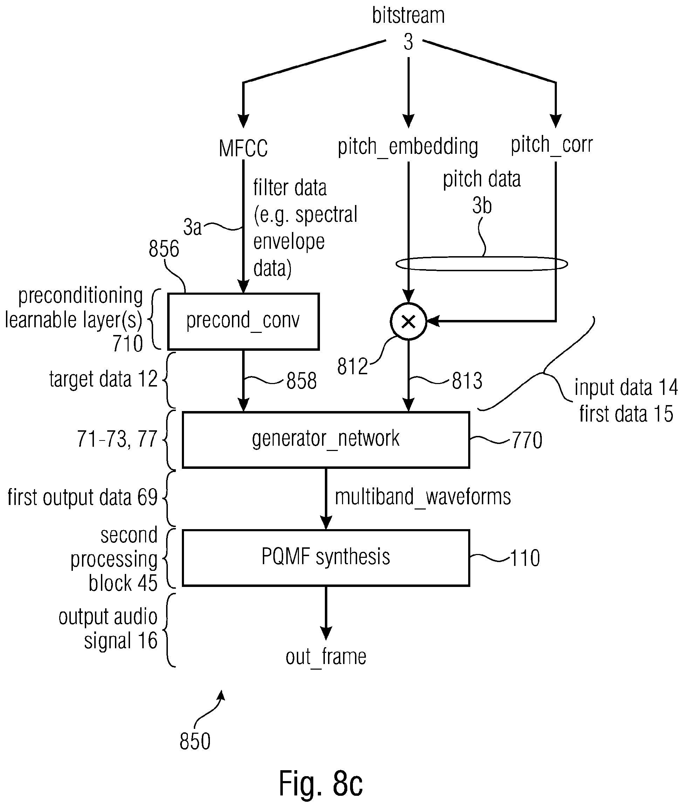

Fig. 8c shows a third schematization 850 in which the first data 15 (which may be considered to be the same as the input data 14) is obtained from the bitstream 3. Here, filter data 3a are MFCCs, which are inputted into a pre-conditional convolution layer 856. The output 858 may be the target data 12. The target data 12 (858) may be inputted to the generator network 770 which may be embodied by layers 71, 72, 73 and 77. The target data 12 (858) may set the conditions onto the generator network 770. The generator network 170 may also be inputted by input data 14 (first data 15) which are shown here as a multiplication 812 (scaling layer) between the pitch_embedding and the pitch_core, to obtain a multiplied value 813 which is used as first data 15 (latent, prior) for the generator network 770. The pitch_embedding and the pitch_core may be understood as part of the pitch data 3b (other data). Both the filter data 3a (MFCC), the pitch_embedding the pitch_core (pitch data 3b) may be obtained from the bitstream 3. By operating as a conditional network, the generator network 770 may provide a first output data 69 (multiband_waveforms) which may be inputted into the second processing block 45. The second processing block 45 may perform, for example, a PQMF synthesis 110. The output out_frame of the PQMF synthesis 110 may be the output audio signal 16. The schematization 850 of Fig. 8c is also discussed below in section 4.3.

In the examples of Figs. 8a and 8b and 8c, at least one of the layers 712, 716, 720, 724, 816, 820, 824, 856, 770 may be or imply a learnable layer. At least one of the layers 712, 716, 720, 724, 816, 820, 824, 856 may be or imply a non-conditional learnable layer. At least one of the layers 712, 716, 720, 724, 816, 820, 824, 856 may be a convolutional layer (e.g. using a kernel learned by training). At least one layer (e.g. at least one of layers 724, 816, 820, 856) may be activated by a ReLu activation function (e.g. a leaky ReLu). At least one layer (e.g. at least one of layers 716, 720, 770) may have no activation function. Different combinations may however be possible.

At least one layer (and in particular the layer 724 may be subjected to weight normalization). Alternatively, any normalization can be employed as batch, instance or layer normalization. The weight normalization may be characterized by the fact that it separates the weight vector from its direction. This has a similar effect as in batch normalization with variance. The only difference is in variation instead of direction. Any of the learnable blocks 712, 716, 720, 724, 856 (or any combination thereof) may be or constitute the preconditional learnable layers 710.

At least one of signals 714, 718, 722, 12 for schematization 700 and 813, 818, 822, 12 for schematization 800, or 858 and 12 for schematization 880 may be understood as target data or target data predecessor predecessors taken from the bitstream 3, and may be used to obtain the conditions 74, 75 (conditioning feature parameters) to be applied to the first data 15 or any processed version thereof. The first data 15 are here shown as Gaussian noise 14 in Figs. 8a and 8b, but they could also be obtained from excitation data 3b (see for example in Fig. 8c and in section 4.3 below).

In some examples, (which may be embodied for example by the code in subsection 4.3 below) the noise (used in the "second option") may be substituted by pitch data 3b such as the pitch multiplied by the correlation value of the pitch, or by other data: the so-called "first option" of Fig. 7 is obtained. Between schematizations 700 and 800, we see that schematization 800 does not have a concatenation layer 712, but we have a scaling layer 812 in which a pitch data 813 is obtained by multiplying a pitch embedding value and a pitch correlation. In this case, there is no necessity of the concatenation, since the two relevant information are already combined by a multiplication operation at 812. Notably, in the schematization 850 of Fig. 8c, the multiplication 812 is performed to obtain a value 813 which is the first data 15 (or input data 14) to the generator network 770, and is used as latent (or prior); contrary thereto, in the schematization 800 of Fig. 8b, the multiplication 812 obtains a multiplied value which is provided to the preconditional layer(s) 710

In the following there is a discussion on the operations mainly performed in blocks downstream to the preconditioning learnable layer(s) 710. Therefore, most of the subsequent discussion takes into account the target data as already obtained from the preconditioning learnable layer(s) 710, and which are applied to the conditioning learnable layer(s) 71-73 (the conditioning learnable layer(s) 71-73 being, in turn, applied to the stylistic element 77). It is reminded that blocks 71-73 and 77 may be embodied by the generator network layer 770. The generator network layer may include a plurality of learnable layers (e.g. a plurality of blocks 50a-50h, see below).

Fig. 7 (and its embodiment in Fig. 4) shows an example of an audio decoder (generator) 10 which decodes (generates, synthesizes) an audio signal (output signal) 16 from the bitstream 3, e.g. according to the present techniques (also called StyleMelGAN). The output audio signal 16 is generated based on the input signal 14 (also called latent signal and which may be noise, e.g. white noise ("first option"), or which can be obtained from parameters of the bitstream 3, such as filter data 3a, such as spectral envelope data) and target data 12 (also called "input sequence"), which may be obtained from the bitstream 3 (for example, from other parameters 3b such as least excitation data or a pitch data or harmonicity data or periodicity data or long-term prediction data encoded in the bitstream). The target data 12 may, as explained above, comprise (e.g. be) a spectrogram (e.g., a mel-spectrogram), the mel-spectrogram providing mapping, for example, of a sequence of time samples onto mel scale (e.g. obtained from the preconditioning learnable layer(s) 710 and/or by at least one of the layers 712, 716, 720, 724 and/or by at least one of the layers 816, 820, 824 or 856, as discussed above). The target data 12 is in general to be processed, in order to obtain a speech sound recognizable as natural by a human listener. The input signal 14 may be or be obtained from the bitstream 3 (e.g. from other information 3b) ("first option"), or may be ("second option") noise (which as such carries no useful information) (other options are possible). In the decoder 10, the first data 15 obtained from the input (obtained from the bitstream 3 or from noise or from an external source) is styled (e.g. at block 77) to have a vector with the acoustic features conditioned by the target data 12. At the end, the output audio signal 16 will be understood as speech by a human listener. The input vector 14 (obtained from the bitstream 3 or from noise or from an external source) may be, like in Fig. 4, a 128x1 vector (one single sample, e.g. time domain samples or frequency domain samples, and 128 channels). A different length of the input vector 14 could be used in other examples. The input vector 14 is processed (under the conditioning of the target data 12 obtained from the bitstream 3 through the preconditioning layers 710) in the first processing block 40. The first processing block 40 includes at least one, e.g. a plurality, of processing blocks 50 (e.g. 50a... 50h). In Fig. 4 there are shown eight blocks 50a...50h (each of them is also identified as "TADEResBlock"), even though a different number may be chosen in other examples. The processing blocks 50a, 50b, etc. provide a gradual upsampling of the signal which evolves from the input signal 14 to the final audio signal 16 (e.g., at least some processing blocks 50a, 50b, 50c, 50d, 50e increases the sampling rate).

The blocks 50a-50h may form one single block 40 (e.g. the one shown in Fig. 7). In the first processing block 40, a conditioning set of learnable layers (e.g., 71, 72, 73, but different numbers are possible) may be used to process the target data 12 and the input signal 14 (e.g., first data 15). Accordingly, conditioning feature parameters 74, 75 (also referred to as gamma, $\gamma$, and beta, $\beta$) are obtained, e.g. by convolution, during training. The learnable layers 71-73 may therefore be part of a weight layer of a learning network. As explained above, the first processing block 40, 50 may include at least one styling element 77 (normalization block 77). The at least one styling element 77 outputs the first output data 69 (when there are a plurality of processing blocks 50, a plurality of styling elements 77 may generate a plurality of components, which may be added to each other to obtain the final version of the first output data 69). The at least one styling element 77 may apply the conditioning feature parameters 74, 75 to the input signal 14 (latent) or the first data 15 obtained from the input signal 14.

The first output data 69 has a plurality of channels.

The audio decoder 10 includes a second processing block 45 (in Fig. 1 shown as including the blocks 42, 44, 46, 110). The second processing block 45 is configured to combine the plurality of channels 47 of the first output data 69 (inputted as second input data or second data), to obtain the output audio signal 16 in one single channel, but in a sequence of samples.

The "channels" are not to be understood in the context of stereo sound, but in the context of neural networks (e.g. convolutional neural networks). For example, the input signal (e.g. latent noise) 14 may be in 128 channels (in the representation in the time domain), since a sequence of channels are provided. For example, when the signal has 40 samples and 64 channels, it may be understood as a matrix of 40 columns and 64 rows, while when the signal has 20 samples and 64 channels, it may be understood as a matrix of 20 columns and 64 rows (other schematizations are possible). Therefore, the generated audio signal 16 may be understood as a mono signal. In case stereo signals are to be generated, then the disclosed technique is simply to be repeated for each stereo channel, so as to obtain multiple audio signals 16 which are subsequently mixed.

At least the original input signal 14 and/or the generated speech 16 may be a vector. To the contrary, the output of each the blocks 30 and 50a-50h, 42, 44 may have in general a different dimensionality. The first data 15 may have a first dimension (e.g. the samples dimension) or at least one dimension lower than that of the audio signal 16. The first data 15 may have a total number of samples across all dimensions lower than the audio signal 16. The first data 15 may have one dimension (e.g. the samples dimension) lower than the audio signal 16 but a number of channels greater than the audio signal 16. In at least some of the blocks 30 and 50a-50e, 42, 44, the signal (14, 15, 59, 69), evolving from the input 14 (e.g. noise or pitch) towards becoming speech 16, may be upsampled. For example, at the first block 50a among the blocks 50a-50h, a 2-times upsampling may be performed. An example of upsampling may include, for example, the following sequence: 1) repetition of same value, 2) insert zeros, 3) another repeat or insert zero + linear filtering, etc.

The generated audio signal 16 may generally be a single-channel signal. In case multiple audio channels are necessary (e.g., for a stereo sound playback) then the claimed procedure shall be in principle iterated multiple times.

Analogously, also the target data 12 has multiple channels (e.g. in spectrograms), as generated by the preconditioning learnable layer(s) 710. In any case, the target data 12 may be upsampled (e.g. by a factor of two, a power of 2, a multiple of 2, or a value greater than 2) to adapt to the dimensions of the signal (59a, 15, 69) evolving along the subsequent layers (50a-50h, 42), e.g. to obtain the conditioning feature parameters 74, 75 in dimensions adapted to the dimensions of the signal.

If the first processing block 40 is instantiated in multiple blocks 50a-50h, the number of channels may, for example, remain at least some of the multiple blocks (e.g., from 50e to 50h and in block 42 the number of channels does not change). The first data 15 may have a first dimension or at least one dimension lower than that of the audio signal 16. The first data 15 may have a total number of samples across all dimensions lower than the audio signal 16. The first data 15 may have one dimension lower than the audio signal 16 but a number of channels greater than the audio signal 16.

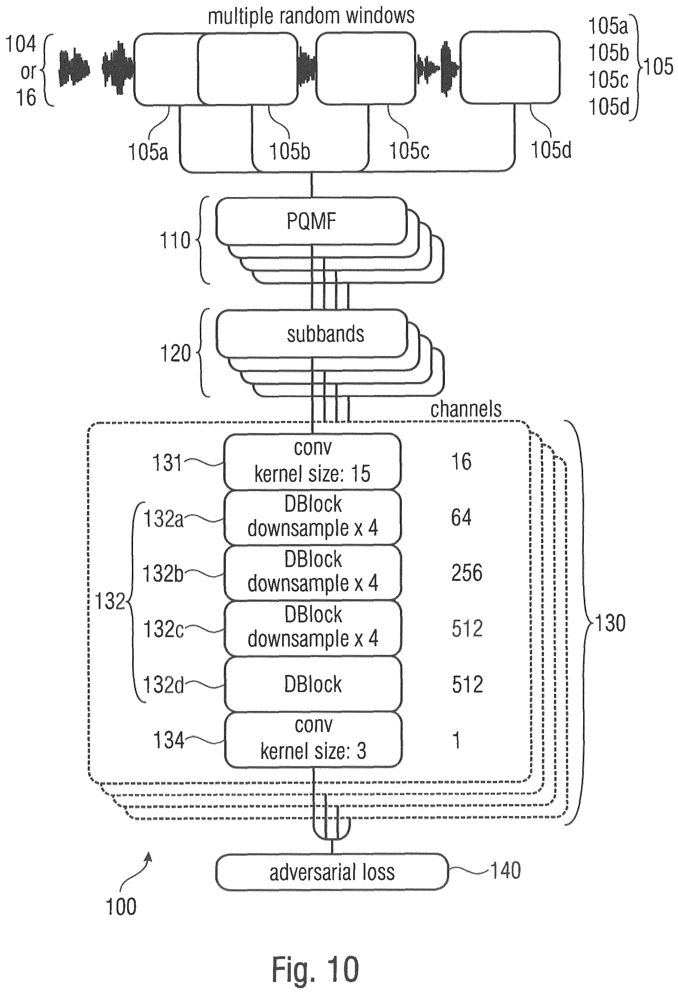

Examples may be performed according to the paradigms of generative adversarial networks (GANs). A GAN includes a GAN generator 11 (Fig. 4) and a GAN discriminator 100 (Fig. 10). The GAN generator 11 tries to generate an audio signal 16, which is as close as possible to a real audio signal. The GAN discriminator 100 shall recognize whether the generated audio signal 16 is real or fake. Both the GAN generator 11 and the GAN discriminator 100 may be obtained as neural networks (or other by other learnable techniques). The GAN generator 11 shall minimize the losses (e.g., through the method of the gradients or other methods), and update the conditioning features parameters 74, 75 by taking into account the results at the GAN discriminator 100. The GAN discriminator 100 shall reduce its own discriminatory loss (e.g., through the method of gradients or other methods) and update its own internal parameters. Accordingly, the GAN generator 11 is trained to generate better and better audio signals 16, while the GAN discriminator 100 is trained to recognize real signals 16 from the fake audio signals generated by the GAN generator 11. The GAN generator 11 may include the functionalities of the decoder 10, without at least the functionalities of the GAN discriminator 100. Therefore, in most of the foregoing, the GAN generator 11 and the audio decoder 10 may have more or less the same features, apart from those of the discriminator 100. The audio decoder 10 may include the discriminator 100 as an internal component. Therefore, the GAN generator 11 and the GAN discriminator 100 may concur in constituting the audio decoder 10. In examples where the GAN discriminator 100 is not present, the audio decoder 10 can be constituted uniquely by the GAN generator 11.

As explained by the wording "conditioning set of learnable layers", the audio decoder 10 may be obtained according to the paradigms of conditional neural networks (e.g. conditional GANs), e.g. based on conditional information. For example, conditional information may be constituted by target data (or upsampled version thereof) 12 from which the conditioning set of layers 71-73 (weight layer) are trained and the conditioning feature parameters 74, 75 are obtained. Therefore, the styling element 77 is conditioned by the learnable layers 71-73. The same may apply to the preconditional layers 710.

The examples may be based on convolutional neural networks. For example, a little matrix (e.g., filter or kernel), which could be a 3x3 matrix (or a 4x4 matrix, etc.), is convolved (convoluted) along a bigger matrix (e.g., the channel x samples latent or input signal and/or the spectrogram and/or the spectrogram or upsampled spectrogram or more in general the target data 12), e.g. implying a combination (e.g., multiplication and sum of the products; dot product, etc.) between the elements of the filter (kernel) and the elements of the bigger matrix (activation map, or activation signal). During training, the elements of the filter (kernel) are obtained (learnt) which are those that minimize the losses. During inference, the elements of the filter (kernel) are used which have been obtained during training. Examples of convolutions may be used at at least one of blocks 71-73, 61b, 62b (see below), 716, 720, 720, 724, 816, 820, 824, 856. Where a convolution is conditional, then the convolution is not necessarily applied to the signal evolving from the input signal 14 towards the audio signal 16 through the intermediate signals 59a (15), 69, etc., but may be applied to the target signal 14 (e.g. for generating the conditioning feature parameters 74 and 75 to be subsequently applied to the first data 15, or latent, or prior, or the signal evolving form the input signal towards the speech 16). In other cases (e.g. at blocks 61b, 62b) the convolution may be non-conditional, and may for example be directly applied to the signal 59a (15), 69, etc., evolving from the input signal 14 towards the audio signal 16. Both conditional and non-conditional convolutions may be performed.

It is possible to have, in some examples, activation functions downstream to the convolution (ReLu, TanH, softmax, etc.), which may be different in accordance to the intended effect.

ReLu may map the maximum between 0 and the value obtained at the convolution (in practice, it maintains the same value if it is positive, and outputs 0 in case of negative value). Leaky ReLu may output x if x>0, and 0.1*x if x≤0, x being the value obtained by convolution (instead of 0.1 another value, such as a predetermined value within $0.1 \pm 0.05$, may be used in some examples). TanH (which may be implemented, for example, at block 63a and/or 63b) may provide the hyperbolic tangent of the value obtained at the convolution, e.g.

$$TanH(x)=(e^x-e^{-x})/(e^x+e^{-x}),$$

with x being the value obtained at the convolution (e.g. at block 61b). Softmax (e.g. applied, for example, at block 64b) may apply the exponential to each element of the elements of the result of the convolution, and normalize it by dividing by the sum of the exponentials. Softmax may provide a probability distribution for the entries which are in the matrix which results from the convolution (e.g. as provided at 62b). After the application of the activation function, a pooling step may be performed (not shown in the figures) in some examples, but in other examples it may be avoided.

It is also possible to have a softmax-gated TanH function, e.g. by multiplying (e.g. at 65b) the result of the TanH function (e.g. obtained at 63b) with the result of the softmax function (e.g. obtained at 64b).

Multiple layers of convolutions (e.g. a conditioning set of learnable layers) may, in some examples, be one downstream to another one and/or in parallel to each other, so as to increase the efficiency. If the application of the activation function and/or the pooling are provided, they may also be repeated in different layers (or maybe different activation functions may be applied to different layers, for example).

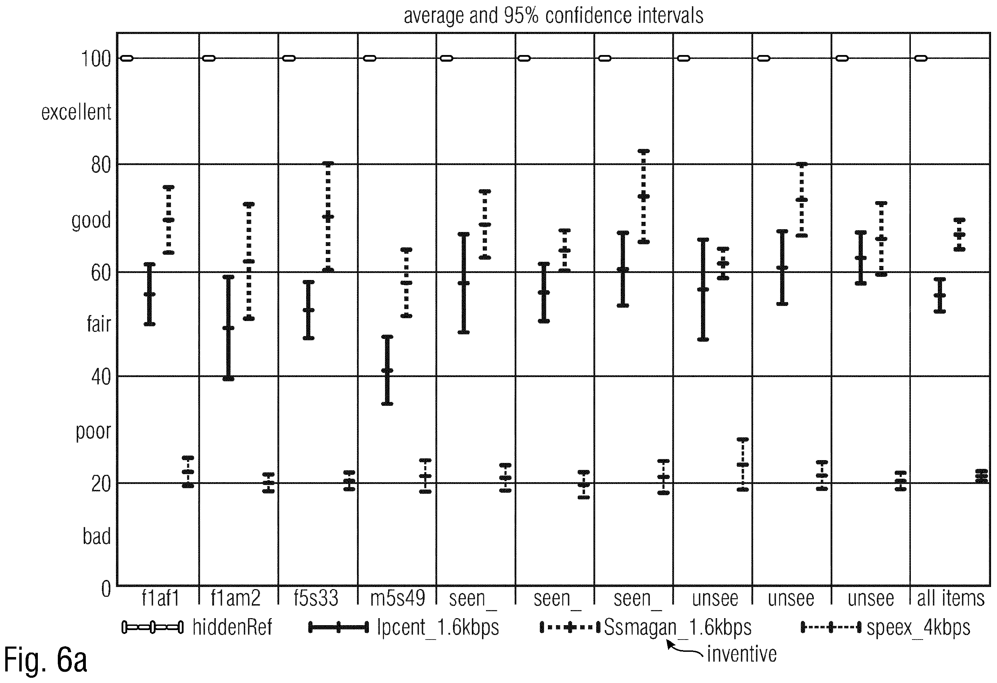

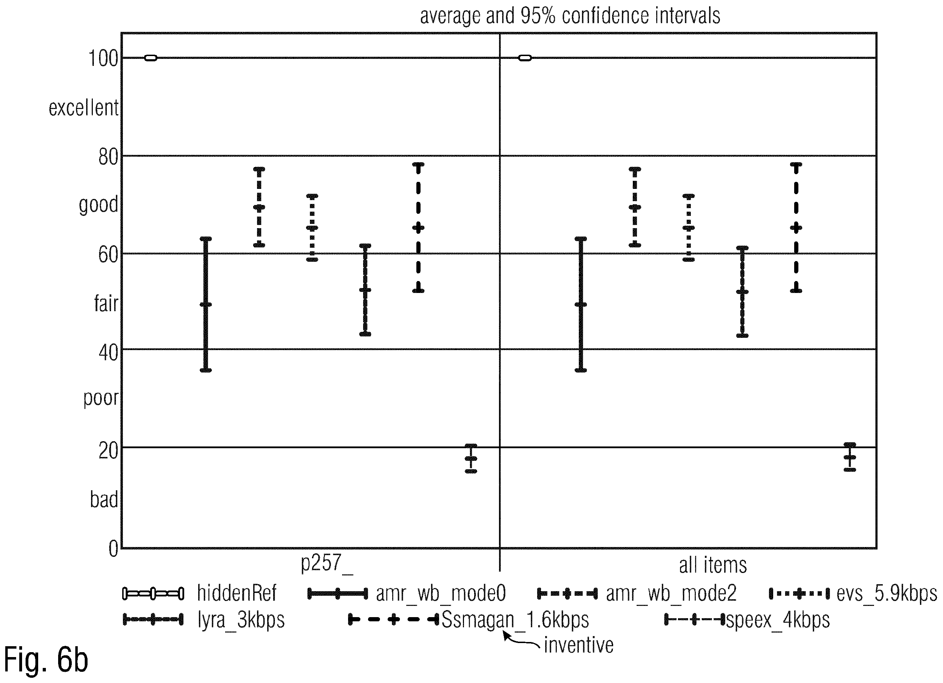

The input signal 14 (e.g. noise or a signal obtained from the bitstream, e.g. excitation data 3a, such as pitch information) is processed, at different steps, to become the generated audio signal 16 (e.g. under the conditions set by the conditioning sets of learnable layers 71-73, and on the parameters 74, 75 learnt by the conditioning sets of learnable layers 71-73). Therefore, the input signal 14 (first data 15) is to be understood as evolving in a direction of processing (from 14 to 16 in Fig. 6) towards becoming the generated audio signal 16 (e.g. speech). The conditions will be substantially generated based on the target signal 12 and/or on the preconditions in the bitstream 3, and on the training (so as to arrive at the most preferable set of parameters 74, 75).

It is also noted that the multiple channels of the input signal 14 (or any of its evolutions) may be considered to have a set of learnable layers and a styling element 77 associated thereto.

For example, each row of the matrixes 74 and 75 may be associated to a particular channel of the input signal (or one of its evolutions), e.g. obtained from a particular learnable layer associated to the particular channel. Analogously, the styling element 77 may be considered to be formed by a multiplicity of styling elements (each for each row of the input signal x, c, 12, 76, 76', 59, 59a, 59b, etc.).

Fig. 4 shows an example of the audio decoder (generator) 10 (which may embody the audio decoder 10 of Fig. 6), and which may also comprise (e.g. be) a GAN generator 11. It is noted that Fig. 4 does now show the preconditioning learnable layer 710 (shown in Fig. 7), even though the target data 12 are obtained from the bitstream 3 through the preconditioning layer(s) 710 (see above and Figs. 7-9). The target data 12 may be a mel-spectrogram obtain from the preconditioning learnable layer 710; the input signal 14 may be a latent noise or a signal obtained from the excitation data (e.g. pitch information) 3b from the bitstream 3, and the output 16 may be speech. The input signal 14 has only one sample and multiple channels (indicated as "x", because they can vary, for example the number of channels can be 80 or something else). The input vector 14 (noise or a signal obtain from the excitation data 3b, like pitch information) may be obtained in a vector with 128 channels (but other numbers are possible). In case the input signal 14 is noise ("first option"), it may have a zero-mean normal distribution, and follow the formula $z \sim \mathcal{N}(0, I_{128})$; it may be a random noise of dimension 128 with mean 0, and with an autocorrelation matrix (square 128x128) equal to the identity I (different choice may be made). Hence, in examples in which the noise is used as input signal 14, it can be completely decorrelated between the channels and of variance 1 (energy). $\mathcal{N}(0, I_{128})$ may be realized at every 22528 generated samples (or other numbers may be chosen for different examples); the dimension may therefore be 1 in the time axis and 128 in the channel axis.

It will be shown that the input vector 14 (whether noise or obtained from the bitstream 3) is step-by-step processed (e.g., at blocks 50a-50h, 42, 44, 46, etc.), so as to evolve to speech 16 (the evolving signal will be indicated with different signals 15, 59a, x, c, 76', 79, 79a, 59b, 79b, 69, etc.).

At block 30, a channel mapping may be performed. It may consist of or comprise a simple convolution layer to change the number channels, for example in this case from 128 to 64.

As can be seen, at least some of the processing blocks 50a, 50b, 50c, 50d, 50e, 50f, 50g, 50h (altogether embodying the first processing block 50 of Fig. 6) increases the number of samples by performing an upsampling (e.g., maximum 2-upsampling), e.g. for each frame. The number of channels may remain the same (e.g., 64) along blocks 50a, 50b, 50c, 50d, 50e, 50f, 50g, 50h. The samples may be, for example, the number of samples per second (or other time unit): we may obtain, at the output of block 50h, sound at 16 kHz or more (e.g. 22Khz). As explained above, a sequence of multiple samples may constitute one frame.

Each of the blocks 50a-50h (50) can also be a TADEResBlock (residual block in the context of TADE, Temporal Adaptive DEnormalization). Notably, each block 50a-50h (50) is conditioned by the target data (e.g., mel-spectrogram) 12 and/or by the bitstream 3 (e.g. by the filter data 3a, such as spectral envelope data, and/or by the other data 3b, such as pitch data).

At a second processing block 45 (Figs. 1 and 6), only one single channel may be obtained, and multiple samples are obtained in one single dimension (see also Fig. 9). As can be seen, another TADEResBlock 42 (further to blocks 50a-50h) may be used (which reduces the dimensions to four single channels). Then, a convolution layer 44 and an activation function (which may be TanH 46, for example) may be performed. A (Pseudo Quadrature Mirror Filter)-bank) 110 may also be applied, so as to obtain the final 16 (and, possibly, stored, rendered, etc.).

At least one of the blocks 50a-50h (or each of them, in particular examples) and 42 may be, for example, a residual block. A residual block operates a prediction only to a residual component of the signal evolving from the input signal 14 (e.g. noise) to the output audio signal 16. The residual signal is only a part (residual component) of the main signal evolving form the input signal 14 towards the output signal 16. For example, multiple residual signals may be added to each other, to obtain the final output audio signal 16.

Fig. 3 shows an example of one of the blocks 50a-50h (50). As can be seen, each block 50 is inputted with a first data 59a, which is either the first data 15, (or the upsampled version thereof, such as that output by the upsampling block 30) or the output from a preceding block. For example, the block 50b may be inputted with the output of block 50a; the block 50c may be inputted with the output of block 50b, and so on. In examples, different blocks may operate in parallel to each other, and there results are added together.

From Fig. 3 it is possible to see that the first data 59a provided to the block 50 (50a-50h) or 42 is processed and its output is the output data 69 (which will be provided as input to the subsequent block). As indicated by the line 59a', a main component of the first data 59a actually bypasses most of the processing of the first processing block 50a-50h (50). For example, blocks 60a, 900, 60b and 902 and 65b are bypassed by the main component 59a'. The residual component 59a of the first data 59 (15) will be processed to obtain a residual portion 65b' to be added to the main component 59a' at an adder 65c (which is indicated in Fig. 3, but not shown). The bypassing main component 59a' and the addition at the adder 65c may be understood as instantiating the fact that each block 50 (50a-50h) processes operations to residual signals, which are then added to the main portion of the signal. Therefore, each of the blocks 50a-50h can be considered a residual block.

Notably, the addition at adder 65c does not necessarily need to be performed within the residual block 50 (50a-50h). A single addition of a plurality of residual signals 65b' (each outputted by each of residual blocks 50a-50h) can be performed (e.g., at one single adder block in the second processing block 45, for example). Accordingly, the different residual blocks 50a-50h may operate in parallel with each other.

In the example of Fig. 3, each block 50 may repeat its convolution layers twice. A first denormalization block 60a and a second denormalization block 60b may be used in cascade. The first denormalization block 60a may include an instance of the stylistic element 77, to apply the conditioning feature parameters 74 and 75 to the first data 59 (15) (or its residual version 59a). The first denormalization block 60a may include a normalization block 76. The normalization block 76 may perform a normalization along the channels of the first data 59 (15) (or its residual version 59a). The normalized version c (76') of the first data 59 (15) (or its residual version 59a) may therefore be obtained. The stylistic element 77 may therefore be applied to the normalized version c (76'), to obtain a denormalized (conditioned) version of the first data 59 (15) (or its residual version 59a). The denormalization at element 77 may be obtained, for example, through an element-by-element multiplication of the elements of the matrix γ (which embodies the condition 74) and the signal 76' (or another version of the signal between the input signal and the speech), and/or through an element-by-element addition of the elements of the matrix β (which embodies the condition 75) and the signal 76' (or another version of the signal between the input signal and the speech). A denormalized version 59b (conditioned by the conditioning feature parameters 74 and 75) of the first data 59 (15) (or its residual version 59a) may therefore be obtained.

Then, a gated activation 900 is performed on the denormalized version 59b of the first data 59 (or its residual version 59a). In particular, two convolutions 61b and 62b may be performed (e.g., each with 3x3 kernel and with dilation factor 1). Different activation functions 63b and 64b may be applied respectively to the results of the convolutions 61b and 62b. The activation 63b may be TanH. The activation 64b may be softmax. The outputs of the two activations 63b and 64b may be multiplied by each other, to obtain a gated version 59c of the denormalized version 59b of the first data 59 (or its residual version 59a).

Subsequently, a second denormalization 60b may be performed on the gated version 59c of the denormalized version 59b of the first data 59 (or its residual version 59a). The second denormalization 60b may be like the first denormalization and is therefore here not described.

Subsequently, a second activation 902 is performed. Here, the kernel may be 3x3, but the dilation factor may be 2. In any case, the dilation factor of the second gated activation 902 may be greater than the dilation factor of the first gated activation 900.

The conditioning set of learnable layers 71-73 (e.g. as obtained from the preconditioning learnable layer(s)) and the styling element 77 may be applied (e.g. twice for each block 50a, 50b...) to the signal 59a. An upsampling of the target data 12 may be performed at upsampling block 70, to obtain an upsampled version 12' of the target data 12. The upsampling may be obtained through non-linear interpolation, and may use e.g. a factor of 2, a power of 2, a multiple of two, or another value greater than 2. Accordingly, in some examples it is possible to have that the spectrogram (e.g. mel-spectrogram) 12' has the same dimensions (e.g. conform to) the signal (76, 76', c, 59, 59a, 59b, etc.) to be conditioned by the spectrogram.

In examples, the first and second convolutions at 61b and 62b, respectively downstream to the TADE block 60a or 60b, may be performed at the same number of elements in the kernel (e.g., 9, e.g., 3x3). However, the second convolutions in block 902 may have a dilation factor of 2. In examples, the maximum dilation factor for the convolutions may be 2 (two).

As explained above, the target data 12 may be upsampled, e.g. so as to conform to the input signal (or a signal evolving therefrom, such as 59, 59a, 76', also called latent signal or activation signal). Here, convolutions 71, 72, 73 may be performed (an intermediate value of the target data 12 is indicated with 71'), to obtain the parameters γ (gamma, 74) and β (beta, 75). The convolution at any of 71, 72, 73 may also require a rectified linear unit, ReLu, or a leaky rectified linear unit, leaky ReLu. The parameters γ and β may have the same dimension of the activation signal (the signal being processed to evolve from the input signal 14 to the generated audio signal 16, which is here represented as x, 59, 59a, or 76' when in normalized form). Therefore, when the activation signal (x, 59, 59a, 76') has two dimensions, also γ and β (74 and 75) have two dimensions, and each of them is superimposable to the activation signal (the length and the width of γ and β may be the same of the length and the width of the activation signal). At the stylistic element 77, the conditioning feature parameters 74 and 75 are applied to the activation signal (which may be the first data 59a or the 59b output by the multiplier 65a). It is to be noted, however, that the activation signal 76' may be a normalized version (at instance norm block 76) of the first data 59, 59a, 59b (15), the normalization being in the channel dimension. It is also to be noted that the formula shown in stylistic element 77 (γc+β, also indicated with $\gamma \odot c + \beta$ in fig. 3) may be an element-by-element product, and in some examples is not a convolutional product or a dot product.

The convolutions 72 and 73 have not necessarily activation function downstream of them. The parameter γ (74) may be understood as having variance values and β (75) as having bias values.

It is noted that for each block 50a-50h, 42, the learnable layers 71-73 (e.g. together with he styling element 77) may be understood as embodying weight layers.

Also, block 42 of Fig. 4 may be instantiated as block 50 of Fig. 3. Then, for example, a convolutional layer 44 will reduce the number of channels to 1 and, after that, a TanH 46 is performed to obtain speech 16. The output 44' of the blocks 44 and 46 may have a reduced number of channels (e.g. 4 channels instead of 64), and/or may have the same number of channels (e.g., 40) of the previous block 50 or 42.

A PQMF synthesis (see also below) 110 is performed on the signal 44', so as to obtain the audio signal 16 in one channel.

Therefore, an example of decoding and generation of the speech 16 is here provided (in some examples, some of the following steps may be omitted or submitted by other ones):

1) A new frame of a bitstream 3 is obtained (e.g. a packet in VoIP, a reception from a radio communication or is read from a mass storage unit).

2) The new frame has filter data 3a (e.g., spectral envelope data) and other data 3b (e.g. pitch data, such as the value of the pitch lag and the correlation), which are juxtaposed (e.g. like in Figs. 2b and 2c) together with previously obtained frames, obtaining a 2-dimension bitstream model or convolution map (different channels, in the ordinate direction, having different parameters of the same frame, different frames being ordered along the ordinate direction).

3) At the preconditioning learnable layer(s) 710, the 2-dimension convolution map is subjected to convolutions to obtain the target data 12 (e.g. mel-spectrograms).

4) In each of the conditional learnable layers 71-73 of each of the TADEResBlocks 50a...50h, the conditioning feature parameters 74 and 75 are obtained.

5) Meanwhile, the firsts data provisioner 702 provides a first data 15 (or any of its evolutions) from an input signal 14, where the input signal 14 is either noise or obtained from the excitation data 3b (e.g. excitation).

6) In the each TADEResBlock 50a...50h, a residual 59a of the first data 15 is processed, by applying the conditioning feature parameters 74 and 75 to the residual 59a.

7) The residuals of each block 50a-50h and 42 is summed together, so as to obtain a first output data 69.

8) The first output data 69 has multiple channels (e.g. less than in the input signal 14) and multiple samples (e.g. more than in the input signal 14), but the second processing block 45 (and in particular the PQMF synthesis block 110) permits to obtain one output audio signal 16 in one channel (or more in general less channels than in the input signal 14) and in multiple samples (e.g. more than in the first output data 69).

### GAN discriminator

The GAN discriminator 100 of Fig. 2 may be used during training for obtaining, for example, the parameters 74 and 75 to be applied to the input signal 12 (or a processed and/or normalized version thereof). The training may be performed before inference, and the parameters 74 and 75 may be, for example, stored in a non-transitory memory and used subsequently (however, in some examples it is also possible that the parameters 74 or 75 are calculated on line).

The GAN discriminator 100 has the role of learning how to recognize the generated audio signals (e.g., audio signal 16 synthesized as discussed above) from real input signals (e.g. real speech) 104. Therefore, the role of the GAN discriminator 100 is mainly exerted during training (e.g. for learning parameters 72 and 73) and is seen in counter position of the role of the GAN generator 11 (which may be seen as the audio decoder 10 without the GAN discriminator 100).

In general terms, the GAN discriminator 100 may be input by both audio signal 16 synthesized generated by the GAN decoder 10, and real audio signal (e.g., real speech) 104 acquired e.g., through a microphone, and process the signals to obtain a metric (e.g., loss) which is to be minimized. The real audio signal 104 can also be considered a reference audio signal. During training, operations like those explained above for synthesizing speech 16 may be repeated, e.g. multiple times, so as to obtain the parameters 74 and 75, for example.

In examples, instead of analyzing the whole reference audio signal 104 and/or the whole generated audio signal 16, it is possible to only analyze a part thereof (e.g. a portion, a slice, a window, etc.). Signal portions generated in random windows (105a-105d) sampled from the generated audio signal 16 and from the reference audio signal 104 are obtained. For example random window functions can be used, so that it is not a priori pre-defined which window 105a, 105b, 105c, 105d will be used. Also the number of windows is not necessarily four, at may vary.

Within the windows (105a-105d), a PQMF (Pseudo Quadrature Mirror Filter)-bank) 110 may be applied. Hence, subbands 120 are obtained. Accordingly, a decomposition (110) of the representation of the generated audio signal (16) or the representation of the reference audio signal (104) is obtained.

An evaluation block 130 may be used to perform the evaluations. Multiple evaluators 132a, 132b, 132c, 132d (complexively indicated with 132) may be used (different number may be used). In general, each window 105a, 105b, 105c, 105d may be input to a respective evaluator 132a, 132b, 132c, 132d. Sampling of the random window (105a-105d) may be repeated multiple times for each evaluator (132a-132d). In examples, the number of times the random window (105a-105d) is sampled for each evaluator (132a-132d) may be proportional to the length of the representation of the generated audio signal or the representation of the reference audio signal (104). Accordingly, each of the evaluators (132a-132d) may receive as input one or several portions (105a-105d) of the representation of the generated audio signal (16) or the representation of the reference audio signal (104).

Each evaluator 132a-132d may be a neural network itself. Each evaluator 132a-132d may, in particular, follow the paradigms of convolutional neutral networks. Each evaluator 132a-132d may be a residual evaluator. Each evaluator 132a-132d may have parameters (e.g. weights) which are adapted during training (e.g., in a manner similar to one of those explained above).

As shown in Fig. 2, each evaluator 132a-132d also performs a downsampling (e.g., by 4 or by another downsampling ratio). The number of channels may increase for each evaluator 132a-132d (e.g., by 4, or in some examples by a number which is the same of the downsampling ratio).

Upstream and/or downstream to the evaluators, convolutional layers 131 and/or 134 may be provided. An upstream convolutional layer 131 may have, for example, a kernel with dimension 15 (e.g., 5x3 or 3x5). A downstream convolutional layer 134 may have, for example, a kernel with dimension 3 (e.g., 3x3).

During training, a loss function (adversarial loss) 140 may be optimized. The loss function 140 may include a fixed metric (e.g. obtained during a pretraining step) between a generated audio signal (16) and a reference audio signal (104). The fixed metric may be obtained by calculating one or several spectral distortions between the generated audio signal (16) and the reference audio signal (104). The distortion may be measured by keeping into account:

- magnitude or log-magnitude of the spectral representation of the generated audio signal (16) and the reference audio signal (104), and/or
- different time or frequency resolutions.

In examples, the adversarial loss may be obtained by randomly supplying and evaluating a representation of the generated audio signal (16) or a representation of the reference audio signal (104) by one or more evaluators (132). The evaluation may comprise classifying the supplied audio signal (16, 132) into a predetermined number of classes indicating a pretrained classification level of naturalness of the audio signal (14, 16). The predetermined number of classes may be, for example, "REAL" vs "FAKE".

Examples of losses may be obtained as

$$\mathcal{L}(D;G) = \mathbf{E}_{x,z}\left[\mathrm{ReLU}(1 - D(x)) + \mathrm{ReLU}\left(1 + D\big(G(z;s)\big)\right)\right],$$

where:

x is the real speech 104,

z is the latent input 14 (which may be noise or another input obtained from the bitstream 3),

s is the mel-spectrogram of x (or more in general the target signal 12).

D(...) is the output of the evaluators in terms of distribution of probability (D(...) = 0 meaning "for sure fake", D(...) = 1 meaning "for sure real").

The spectral reconstruction loss $\mathcal{L}_{\mathrm{rec}}$ is still used for regularization to prevent the emergence of adversarial artifacts. The final loss is can be, for example:

$$\mathcal{L} = \frac{1}{4}\sum_{i=1}^{4}\mathcal{L}(D_i;G) + \mathcal{L}_{\mathrm{rec}}.$$

where each i is the contribution at each evaluator 132a-132d (e.g.. each evaluator 132a-132d providing a different $D_i$) and $\mathcal{L}_{\mathrm{rec}}$ is the pretrained (fixed) loss.

During training, there is a search foddr the minimum value of $\mathcal{L}$, which may be expressed for example as

$$\min_{G}(\mathbf{E}_z\left[\sum_{i=1}^{4} -D_i\, G(s,z)\right] + \mathcal{L}_{\mathrm{rec}})$$

Other kinds of minimizations may be performed.

In general terms, the minimum adversarial losses 140 are associated to the best parameters (e.g., 74, 75) to be applied to the stylistic element 77.

## Discussion

A discussion on the inventive examples is provided here below. For more clarity, the discussion is divided in sections.

Recently, it has been noted that that Generative Adversarial Network (GAN)-based vocoders outperform autoregressive and flow-based approaches in terms of quality of the synthesized speech while being orders of magnitude faster. Meanwhile, neural vocoders have also been successfully applied to speech coding at very low bit-rates. The neural vocoder used at the decoder is able to generate natural speech from a highly compressed representation. However, coding schemes proposed so far rely on autoregressive models exploiting the causal nature of the speech waveform, but limited to a sample-by-sample signal generation. An aim of this work is twofold: make the GAN-based Neural Vocoder suitable for streaming and coding applications. Starting from the StyleMelGan model, the convolutions of the model were made causal, and conditioning and prior produced with a limited look ahead. It was ensured that the speech can be generated with a constrained delay and generated continuously frame-by-frame. The quality was found to be very close to that of a batch processing. Further, the coded parameters were fed in an efficient way to the neural vocoder by two ways. Spectral envelope information is used to conditioned the TADERes blocks of smGAN, while the pitch information is exploited to build the low-dimensionality prior. Experimental results show that the obtained coding scheme outperforms the previously published solutions to date in coding clean speech at very low bit-rate coding.

Combining parametric speech coding and neural Vocoder leads to new coding paradigms enabling a compression factor for speech much higher than with conventional approaches. It was demonstrated that conditioning a neural vocoder with coded parameters could produce natural wideband speech e.g. at bit-rates 2 kbps or even lower. Until now neural-vocoder speech coders relied on an auto-regressive generative Network, engendering low delay by it-self, but complex by nature since generation happens by design sample-by-sample.

Most GAN vocoders offer very fast generation on GPUs, but at the cost of compromising the quality of the synthesized speech. GAN-based neural vocoder were recently shown [1] to be competitive and viable alternatives to autoregressive approaches for speech synthesis, and in for Text-To-Speech applications (TTS). However, they are by design not suited for streaming or for real-time speech communication, since they generate by heavy parallelization of the processing a large block of samples at once. Moreover, it was still not demonstrated that GAN-based neural Vocoder could be conditioned with something else than a relatively continuous representation of the speech like Mel-Spectrogram. For speech coding applications using a highly discrete representation of the speech (also called parametric representation), one still needs to demonstrate the feasibility using a GAN approach.

The aim of the present invention is twofold:

- Make GAN-based generate model streaming compatible
- Enable GAN approach to work with a very compact representation of speech consisting of discrete acoustic features also called speech parameters.

**FURTHER CHARACTERIZATION OF THE FIGURESS**

Figure 1: High-level block-diagram of a neural-vocoder speech coder.
Figure 2: convolution model according to: a) non-streaming, b) streaming with internal state management, c) streaming with external state management.
Figure 3: Modification of the TADE Residual block for the stream-wise smGan (ssmGAN).
Figure 4: Optimized smGan with mutli-band generation.

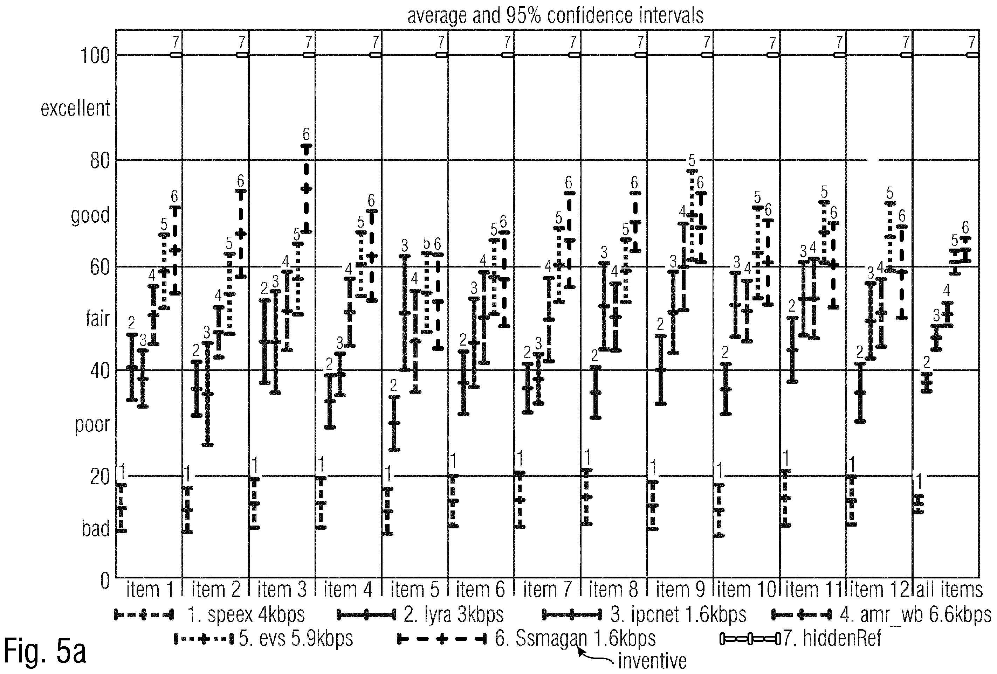

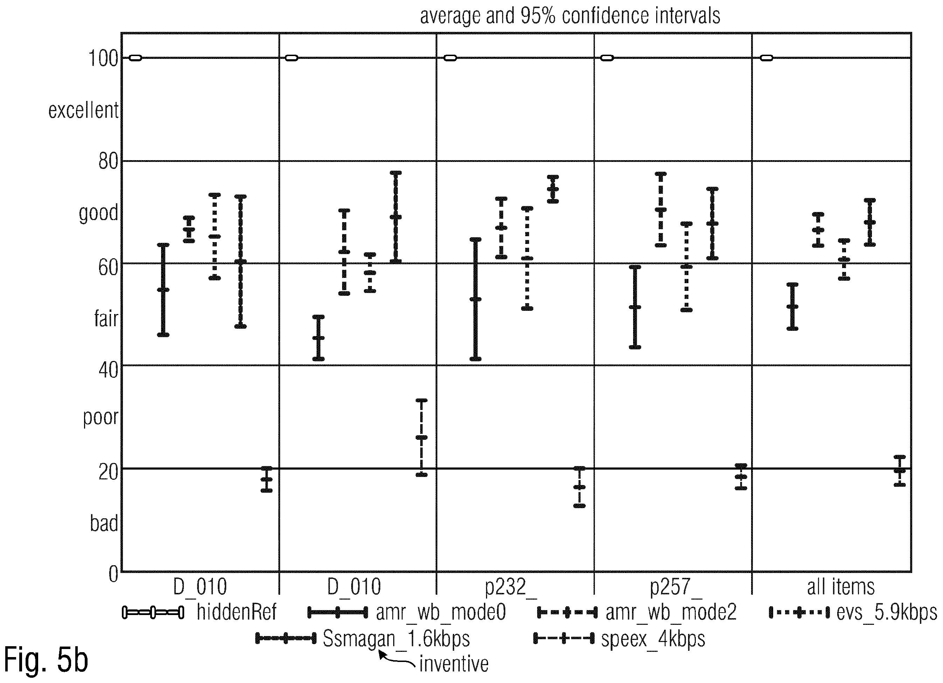

Figure 5a and 5b: MUSHRA listening test results using a pre-condition in network before smGan.
Figures 6a and MUSHRA listening test results.

**2. GENERATIVE MODELS FOR SPEECH CODING**

In this section we describe the main architecture of speech coding schemes based on a neural-vocoder. The principle was first exposed and demonstrated in [6], and adopted in subsequent works [7, 8, 9]. As illustrated in Fig. 1, the encoder analysis the input speech signal at a sampling rate of 16 kHz in case of wideband speech.

Eventually and since the very low bit-rate scheme is usually de-signed and trained for a given source, the input signal could been pre-processed beforehand by for example noise suppression module as proposed in [9] or any kind of source separation or speech enhancement processing to get speech signal as clean as possible.

The encoder first analyzes the signal for extracting a set of acoustic features, which will be quantized, coded and then trans-mitted. In our case, and for comparison purposes, we stick to the features employed in LPCNet 1.6 kbps coder as described in [7]. The coded parameters and their respective bit-rates are summarized in Table 1. We find the usual acoustic features conveyed in parametric speech coding, i.e. the spectral envelope, the pitch information, and the energy.

Table 1: LPCNet coded parameters and it allocation for bit allocation for a 40ms packet

| Coded Parameters | Bits/packet |
| --- | --- |
| Pitch lag | 6 |
| Pitch modulation | 3 |
| Pitch correlation | 2 |
| Energy | 7 |
| Cepstrum absolute coding | 30 |
| Cepstrum delta coding | 13 |
| Cepstrum interpolation | 3 |
| Total | 64 |

The decoder mainly consists of a neural vocoder which is conditioned by the coded parameters. For example, LCPNet 1.6 kbps adopts a recursive architecture based on WaveRNN relying on linear prediction to reduce further complexity, generating the signal in the residual linear prediction domain. The decoding is then divided into two parts: a frame-rate network that computes from the coded parameters the conditioning at every 10ms frame, and a sample-rate network that computes the conditional sampling probabilities. In addition to using the previously generated speech sample, LPCNet also uses the 16th-order prediction coefficients (LPC) and the previously generated excitation sample to predict the current excitation sample. WaveRNN is also adopted in more recent work [9], com-pressing speech at 3kbps by directly coding stacked Mel-Spectra.

In the present work, we propose to replace the auto-regressive neural Vocoder with a GAN-based approach in order to benefit from its feed-forward architecture and a potential gain in quality.

## 3. STREAMWISE STYLE-BASED GAN VOCODER

In the current work we have modified StyleMelGAN introduced in [10], a lightweight neural vocoder allowing synthesis of high-fidelity speech with low computational complexity. StyleMelGAN employs temporal adaptive normalization to style a low-dimensional noise vector with the acoustic features of the target speech. For efficient training, multiple random-window discriminators adversarially evaluate the speech signal analyzed by a filter bank, with regularization provided by a multi-scale spectral reconstruction loss. The highly parallelizable speech generation is several times faster than real-time on CPUs and GPUs.

The computational advantage of GAN-based vocoder relies mainly on the high parallelization of the speech synthesis, which allows the neural vocoder to generate a relatively large audio sequence in one shot. This is only possible if the model doesn't rely on any feedback loop but on a feedforward architecture. However in the case of audio coding, the algorithmic delay must be limited, and consequently the generation must be done frame-by-frame, in a streaming fashion and with a limited frame size. To ensure a total algorthmetic delay allowing comfortable communication, not only the frame size but also the access to future information during the generation must be limited. Deriving a streaming model from an original model is a relatively common optimization for achieving more efficient inference, which involves replacing non-causal convolutions with causal ones [11]. Fig. 2 shows an example of convolutions and their memory management in such a case.

Several modifications were therefore made to the original smGAN model. First, the convolutions were made causal and the synthesis lookahead was removed in the conditioning. It turned out that the model is robust enough for such modifications and through informal evaluations, the quality was found unaffected, or only very minimally, by such modifications. Coupled with the LPCNet features, streamwise smGAn generates frames of 10ms and does not exploit any additional synthesis lookahead, leading to a total delay of 55 ms, which is uniquely coming from the original extraction of the LPCNet features and the size of the encoded packets. Total de-lay is then 10ms lower than the original 65ms of LPCNet 1.6kbps.

Moreover, the TADE residual blocks are slightly modified from the original model, as shown in Fig. 3. It was observed that the complexity can be reduced by using a single TADE layer and applying the same $\beta$ and $\gamma$ twice rather than having two separate TADE layers. In addition, instance normalization was advantageously re-placed by channel normalization.

Finally, the whole architecture has been revisited to speed up the generation. In particular, smGAN has been made faster by adapting a multiband synthesis as introduced in [12, 13]. Rather than synthesizing the speech signal in time domain at the output sample rate fs, the generator outputs simultaneously N different frequency bands samples at $fs/N$ Hz. By design, smGan generates the frequency bands frame-wise, which are then fed to a Pseudo QMF synthesis filter-bank to obtain a frame of synthesized speech. Fig. 4 shows the dimensions for a 10ms framing for generating a wideband speech sampled at 16 kHz.

## 4. CONDITIONING

The next sections will introduce different ways of conditioning the stream-wise smGAN with the LPCNet coded parameters. For this we will introduce different pre-conditioning networks and different strategies.

### 4.1. Mel-Spectrogram enforcement (fig. 8a)

In this section we introduce a way to couple the coded parameters to the GAN-based neural-vocoder by enforcing a homogenous speech representation for conditioning the stream-wise smGAN. As pre-conditional network is introduced to map coded parameters, well suited for an efficient coding, to the Mel-Spectrogram representation, well suited for neural vocoder conditioning. Mel-Spectrogram has been shown to convey sufficient acoustic features to generate a high-fidelity speech signal. Its two-dimensional representation is particularly well suited for convolutional kernels. Changing the nature of either the neural vocoder conditioning or the coded parameters will impact the speech synthesis quality or the coding efficiency respectively. Therefore, we propose in a pragmatic way to decouple the problem by recovering first a realistic Mel-Spectrogram from the coded parameters before the waveform generation. Both the neural vocoder and the pre-conditional network are jointly trained, and adversarial learning can make the Mel-Spectrogram and hence the generated speech more natural and realistic by generating a fine structured signal even in high frequencies.

The contribution allows mapping a non-homogeneous parametric representation of the speech, efficient for speech transmission, to a homogeneous representation, like the Mel-Spectrogram, well suited for conditioning neural generative networks.

The pre-conditioning net consists of two convolutional layers followed by two fully-connected layers. All layers are activated by Leaky RE-LU which was found better than the than activation used in the LPCNet frame-rate network. The pre-conditional net is trained using the L1-norm as a regression loss.

```
pitch_embedding
= nn . Embedding (354, 61)
precond_conv1
= ConvLayer (80, 128)
precond_conv2
= ConvLayer (128 , 128)
precond_dense = Dense (
weigth_norm ( Linear (128 , 128)) ,
LeakyReLU ,
weigth_norm ( Linear (128, 80)) ,
LeakyReLU)
precond_input
= concatenate (
    mfcc ,
    norm_corr , pitch_embedding ( pitch ) )
    precond_output
= precond_conv1 (precond_input)
precond_output
= precond_conv2 (precond_output)
mel_spec
= precond_dense (precond_output)
multiband_waveforms
= generator_network (
    conditioning = mel.spec ,
    prior = gaussian_noise (1 , 64))
    out_frame = pqmf.synthesis (multiband_waveforms)
```

A Mushra test was conducted comparing the speech coder with pre-cond Net amd smGan, and compared to LPCNet 1.6 kbps and conventional coding schemes. Results presented in Fig 5 show the superiority of the present approach over prior arts.

Although the previously introduced approach delivers a quality superior to the original LPCNet 1.6kbps using exact same in-formation, problems are still observed especially in the prosody of certain generated speech items. The pitch information seems not be well preserved in the generated Mel-Spectrogram. Moreover this two steps approach is obviously suboptimal by design and by optimizing sequentially two networks.

Although the previously introduced approach delivers a higher quality than the original 1.6kbps LPCNet, and that using exactly the same information, some problems are still observed, especially in the prosody of some of the generated speech items. The pitch information does not seem to be not always well preserved in the generated Mel-Spectrogram. Furthermore, this two-step approach is clearly suboptimal by design and by sequentially optimizing two separated networks.

### 4.2. Pitch enforcement (Fig. 8b)

In the previous section, we observed that the enforcement of the Mel-Spectrogram as an intermediate representation works but still has some typical problems with the prosody, which is assumed to come from the pitch information. To circumvent the effect of coarse quantization on the pitch lag, we propose another pre-conditional network, this time enforcing the original pitch information to be recovered. For this, the pre-conditioning network was trained to minimize the error between a predicted pitch and an estimate of it performed on the original signal and found close to the ground truth.

```
pitch_embedding
= Embedding (512, 128)
precond_conv1
= ConvLayer (147
    , 256 ,
    LeakyReLU ,
    kernel_size=9)
precond_conv2
    = ConvLayer (256
        , 256 ,
        LeakyReLU ,
        kernel_size =9)
 precond_dense=
 p_embed
    = pitch_embedding (pitch) * pitch_corr
    precond_out = precond_conv1 ([mfcc , p_embed])
    precond_out = precond_conv2 (precond_out)
    precond_out = precond_dense (precond_out)
    multiband_waveforms
= generator_network (
    conditioning = precond_out , prior = noise )
    out_frame
= pqmf . synthesis (multiband_waveforms)
```

### 4.3. Pitch information in prior (E.g. Fig. 8c)

In this section, we introduce a new way of conditioning smGan by the coded parameters. Instead of enforcing the Mel-Spectrogram as an intermediate representation, the coded pa- rameters are introduced more directly into the generative network, thus reducing the size of the preconditioning network but also being more efficient in the generation. Since the pitch information was shown to be critical, it is processed separately from the spectral envelope information. Indeed, the decoded MFCCs and energy are used for conditioning the generating and styling the prior signal. The latter is in this case not created from random noise but rather from an embedded representation of the pitch information and the pitch correla- tion.

```
pitch_embedding
= Embedding (354,128)
precond_conv
= ConvLayer (
    18, 80 ,
    LeakyReLU ,
    kernel_size =9)
    pitch_embed
= pitch_embedding (pitch)
    * pitch_corr
    multiband_waveforms
= generator_network (
 conditioning = precond_conv (mfcc) ,
 prior = pitch_embed)
 out_frame
= pqmf . synthesis (multiband_waveforms)
```

## 5. EVALUATION

### 5.1. Complexity

We report the computational complexity estimate in Tab. 2. It is worth mentioning that since smGAN is capable of high parallelization during the generation, unlike the other listed autoregressive models, it could benefit from a much faster generation on a dedicated platforms based on for example on GPUs.

Table 2: Complexity estimation

| Model | Complexity |
| --- | --- |
| Stream-wise SmGAN | 4.56 GMACS |
| LPCNet [7] | 3 GFLOPs |
| Multi-band WaveRNN [12] | 5.5 GFLOPS |

### 5.2. Experimental setup

Training was done on VCTK database.

### 5.3. Subjective test

We conducted a MUSHRA listening test assessing the stream-wise smGan conditioned with LPCnet parameters coded at 1.6 kbps using technique described in section 4.3. The test involved 2 expert listeners and results are shown in Fig. 6.

The anchor is generated using the Speex speech coder employed at a bit rate of 4 kbps. The quality is expected to be very low at this bit rate and it provides only narrowband speech. Three neural vocoder coders were considered: LPCnet at 1.6 kbps, Lyra at 3 kbps and our solution at 1.6 kbps. As benchmarks, two classical but still modern coders were added: AMR-WB at 6.6kbps and 3GPP EVS at 5.9kbps. It is worth mentioning that EVS at 5.9kbps works with a variable bit rate (VBR) and that 5.9 kbps reflects the average bit rate on active frames. During a long inactive phase, EVS goes into a non-transmission mode (DTX), transmitting only periodically packets at a bit-rate as low as 2.4kbps. The test items were composited with limited pauses, and DTX mode plays a very minor role in this test.

LPCNet was trained on the same database used to train our model, i.e. VCTK. Another difference from the original work is that we do not apply a domain adaptation by first training on unquantified and then quantified features. As VCTK is a noisier and much more diverse database than the NTT database used in the original work, we have removed the data augmentation which was found to penalize the final quality.

### 6. CONCLUSIONS OF THE DISCUSSION

In this paper, we have proposed to adopt a GAN-based neural vocoder, using a feed-forward generator for the speech synthesis. Achieved quality was shown to be superior to existing solutions using auto-regressive models and this by using the exact same coded parameters. For this purpose, we introduce two main contributions: the streaming of the feed-forward generation, required for real-time applications with low algorithmic delay, and also a proper conditioning of the model using much a much more compact representation than the conventional Mel-Spectrogram acoustic feature. We demonstrate that a GAN-based neural vocoder can be very competitive for a coding application and bring a new mark to obtain peach at very low bitrates.

### Some advantageous technical effects

Potential applications and benefits from the invention for speech coding:

The present examples lower significantly the bit-rate by transmitting only the parameters necessary for conditioning the neural vocoder.
Lightweight neural vocoder-based solution suitable for embedded system, especially suitable for upcoming (end-) User Equipment (UE) equipped with GPU or Neural Processing Unit (NPU).

### Aspects

According to an aspect, examples above are directed to an audio decoder, configured to generate an frame of an audio signal from an input signal and target data, the target data representing an audio signal windowed around the target frame to reproduce, comprising:

+ a first processing block, configured to receive first data derived from the input signal and to output first output data, wherein the first output data comprises a plurality of channels, and
+ a second processing block, configured to receive, as second data, the first output data or data derived from the first output data,

wherein the first processing block comprises for each channel of the first output data:
a conditioning set of learnable layers configured to process the target data to obtain conditioning features parameters; and
wherein the second processing block is configured to combine the plurality of channels of the first output data to obtain the audio signal.

According to an aspect, examples above are directed to an audio decoder, configured to generate a frame of an audio signal from an input signal and target data, the target data representing an audio signal windowed around the target frame to reproduce, comprising:

+ a first processing block, configured to receive first data derived from the input signal and to output first output data, wherein the first output data comprises a plurality of channels, and

+ a second processing block, configured to receive, as second data, the first output data or data derived from the first output data,

wherein the first processing block comprises for each channel of the first output data:
a conditioning set of learnable layers configured to process the target data to obtain conditioning features parameters; and
wherein the second processing block is configured to combine the plurality of channels of the first output data to obtain the audio signal.

According to an aspect, examples above are directed to an audio decoder, to generate audio signal from an input signal and coded data, the coded data representing information of an original audio signal to be generated comprising:

+ a first processing block, configured to receive first data derived from the input signal and to output first output data, wherein the first output data comprises a plurality of channels, and
+ a second processing block, configured to receive, as second data, the first output data or data derived from the first output data,

wherein, the first processing block comprises for each channel of the first output data:

a pre-conditioning set of learnable layers configured to process the coded data to obtain a target data,
a conditioning set of learnable layers configured to process the target data to obtain conditioning features parameters; and

wherein the second processing block is configured to combine the plurality of channels of the first output data to obtain the audio signal.

## Considerations

In the present document we have provided examples of a so-called Streamwise StyleMelGAN (SStyleMelGAN).

StyleMelGAN [10] is a lightweight neural vocoder allowing synthesis of high-fidelity speech with low computational complexity. It employs Temporal Adaptive DE-normalization (TADE) that styles the upsampling of a low-dimensional noise vector with the acoustic features of the target speech (e.g., mel-spectrogram) via in-stance normalization and elementwise modulation. More precisely it learns adaptively the modulation parameters y (gamma) and □ (beta) from the acoustic features, and then applies the transformation

$$\gamma \odot c + \beta, \qquad\qquad (1)$$

where c is the normalized content of the input activation. For efficient training, multiple random-window discriminators adversarially evaluate the speech signal analyzed by a set of PQMF filter banks, with the generator regularized by a multi-resolution STFT loss.

Convolutions in StyleMelGAN of [10] were non-causal and run as a moving-average on sliding windows of the input tensors. This results in significant amount of algorithmic delay due to the deep hierarchical structure of the model. In the present document, we describe major modifications to this baseline model that enable the generation at very low delay with different acoustic features for conditioning.

Here, we describe a new way of conditioning StyleMelGAN by the coded parameters. Instead of enforcing the mel-spectrogram as an inter-mediate representation, the coded parameters may be introduced more directly into the generative network (e.g. 770, 40, 50), thus reducing the size of the preconditioning network (e.g. 710) but also being more efficient in the generation. The pitch information (e.g. pitch data) 3b was shown to be critical for high-quality synthesis, and hence it may be processed separately from the spectral envelope information (or filter data) 3a. More precisely, the decoded MFCCs and energy may be used for conditioning the generating and styling the prior signal (e.g. 14, 15), which (in the "first option") is not necessarily created from random noise (as in the "second option"), but rather from a learned embedded representation of the pitch information and/or their memory management in such a case.

Figure 4 may be understood as picturing an example of forward pass for a 10 m sec framing for generating a wideband speech sampled at 16 kHz.

The training procedure and hyperparameters are similar to the ones described in [10]. We train SSMGAN using one NVIDIA Tesla V100 GPU on a subset of the VCTK corpus [17] at 16 kbit/s. The conditioning features are calculated as in [6] as described in Section 2. The generator is pretrained for 200 k steps using the Adam optimizer [18] with learning rate $lr_g = 10^{-4}$, $\beta = \{0.5, 0.9\}$. When starting the adversarial training, we set $lr_g$ use the multi-scale discriminator described in [5] trained via the Adam optimizer with $lr_d = 2 * 10^{-4}$, and same $\beta$. The batch size is 32 and for each sample in the batch we extract a segments of length 1 s. The adversarial training lasts for about 1.5 M steps.

The anchor is generated using the Speex speech coder em-ployed at a bit rate of 4 kbit/s. The quality is expected to be very low at this bit rate and it provides only narrowband speech. Two state-of-the-art neural vocoder coders were considered, LPC-net at 1.6 kbit/s, Lyra at 3 kbit/s, as well as two classical but still modern classical coders AMR-WB at 6.6 kbit/s and 3GPP EVS at 5.9 kbit/s. It is worth mentioning that EVS at 5.9 kbit/s works with a variable bit rate (VBR) and that 5.9 kbit/s reflects the average bit rate on active frames. During a long inactive phase, EVS switches to a non-transmission mode (DTX), transmitting only pe-riodically packets at a bit rate as low as 2.4 kbit/s. The test items were composited with limited pauses, and DTX mode plays a very minor role in this test.

LPCNet was trained on the same database used to train our model, i.e. VCTK. Another difference from the original work is that we do not apply a domain adaptation by first training on un-quantized and then fine-tuning quantized features. As VCTK is a noisier and much more diverse database than the NTT database used in the original work, we have removed the data augmentation which was found to penalize the final quality.

An important contribution to SSMGAN's computational complexity stems from the convolutions in the TADERes-Blocks 50 (e.g. 50a-50h, 42) and the upsampling layers (see above). If $\Lambda$ denotes the latent dimension (e.g. the number of channels of the target data or the input signal 14)), K the lengths of the convolutional kernels, and $\Phi$ the dimension of the preconditioning input features (e.g. the filter data taken from the bitstream), then (ignoring activations and lower order terms) the evaluation of a TADEResBlock takes $(\Phi + 5\Lambda)\,\Lambda\,K$ multiply accumulate operations (MACs) per output sample. Furthermore, an upsampling layer with kernel size K and latent dimension $\Lambda$ takes $\Lambda^2 K$ MACs. With $\Lambda = 64$, $K = 9$, $\Phi = 80$ and TADEResBlock output sampling rates of 10, 200, 500, 1000, 2000, 4000, 4000, 4000, and 4000 Hz this accumulates to

$$(80 + 5 \cdot 64) \cdot 64 \cdot 9 \cdot (100 + 200 + 500 + 1000 + 2000 + 4 \cdot 4000)$$

$$+ 64^2 \cdot 9 \cdot (200 + 500 + 1000 + 2000 + 4000)\ \text{MACS/sec}$$

$$\approx 4.8\ \text{GMACS/sec}$$

On platforms providing fused multiply accumulate (FMA) instructions this translates into 4.8 GFLOPS/s. A comparison with other neural vocoders used for neural speech coding is given in Table 2.

It should be noted, that the convolutional structure of the inventive SSMGAN allows for efficient parallel execution, which gives it a decisive advantage over autoregressive models on GPUs. Furthermore, SSMGAN runs in X times real-time on a desktop CPU. It should also run in real time on common smart-phone CPUs and will only consume a small fraction of the compute capabilities of modern AI accelerators for edge devices.

## Some assumptions (e.g. for TTS applications)

For some applications (e.g. TTS applications) some assumptions above may be relaxed, and some generalizations may be made.

The preconditioning layer 710 (e.g. for TTS applications, see also below, but also for other applications) is learnable.

In some examples (e.g. in TTS applications, see below), the target data 12 (which are often referred to as acoustic features such as mel-spectrograms, log-spectgrams, MFCCs), may also be text features and/or linguistic features.

The same applies to the bitstream 3, which may be derived from text as explained above, and may include text features, acoustic features, or linguistic features (see also below).

Therefore, the learnable layer converts the bitstream 3 from a bitstream format onto the target data in target data format.

At first, we may consider the decoder 10 (generator) as being subdivided onto:

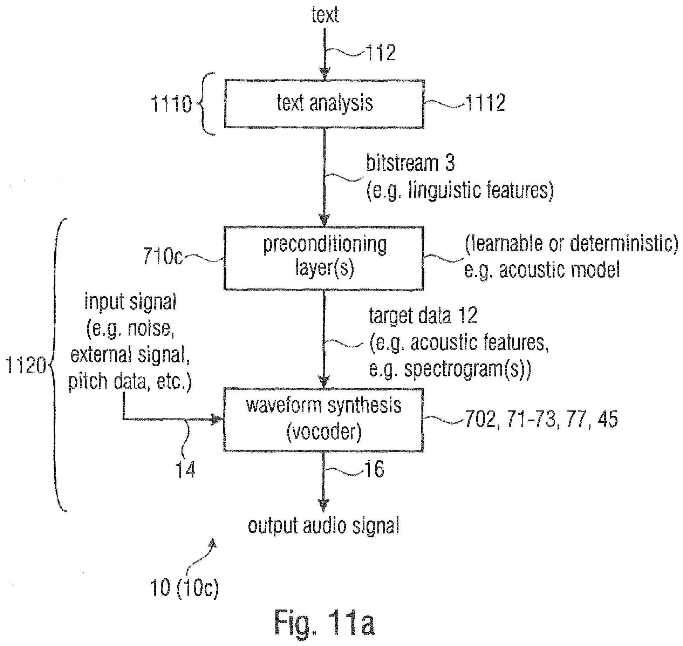

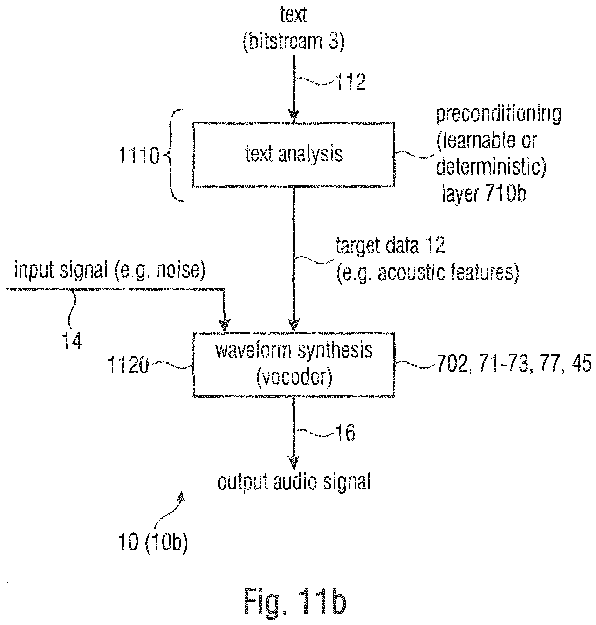

1) A block 1110 (Figs. 11a and 11b) for text analysis and/or audio synthesis, which culminates is preparing an input sequence (bitstream 3) to be output to the preconditioning layer (e.g. 710).
2) A waveform synthesis block 1120 (Figs. 11a and 11b) for generating the audio signal 16, e.g. in form of audio wave. In these cases, Fig. 4 may be considered to show a waveform synthesis block 1120 (and also Figs. 3 and 10 would be considered as showing parts of the waveform synthesis block 1120).

In some cases, the block 1110 may not be part of the decoder 10 (generator) (the block 1110 may not exist or may be in an external device). With reference to Figs. 7 and 7b, the elements 71, 72, 73, 702, 77, and 45 may be considered to be part of waveform block 1120, while the at least one preconditioning layer 710 may be considered to be part of text analysis block 1110. With reference to Fig. 7a, the elements 71, 72, 73, 702, 77, 45 and 710c may be considered as being part of the block 1120, while text analysis block 1110 may be external to the generator 10 (or it may be internal).

When referring to TTS applications, the bitstream 3 of Figs. 1, 7-7b, 8a-8c may be at least one of:

- at least one text feature (e.g. character, word, etc.),
- at least one linguistic feature (e.g. at least one among a phoneme, words prosody, intonation, phrase breaks, and filled pauses, e.g. obtained from a text), and
- at least one acoustic feature (e.g. at least one among a log-spectrogram, an MFCC, and a mel-spectrogram, e.g. obtained from a text)

The output (target data 12) of the at least one preconditioning learnable layer 710 may be at least one of:

- at least one text feature (e.g. character, word, etc.),
- at least one linguistic feature (e.g. at least one among a phoneme, words prosody, intonation, phrase breaks, and filled pauses, e.g. obtained from a text), and
- at least one acoustic feature (e.g. at least one among a log-spectrogram, an MFCC, and a mel-spectrogram, e.g. obtained from a text)

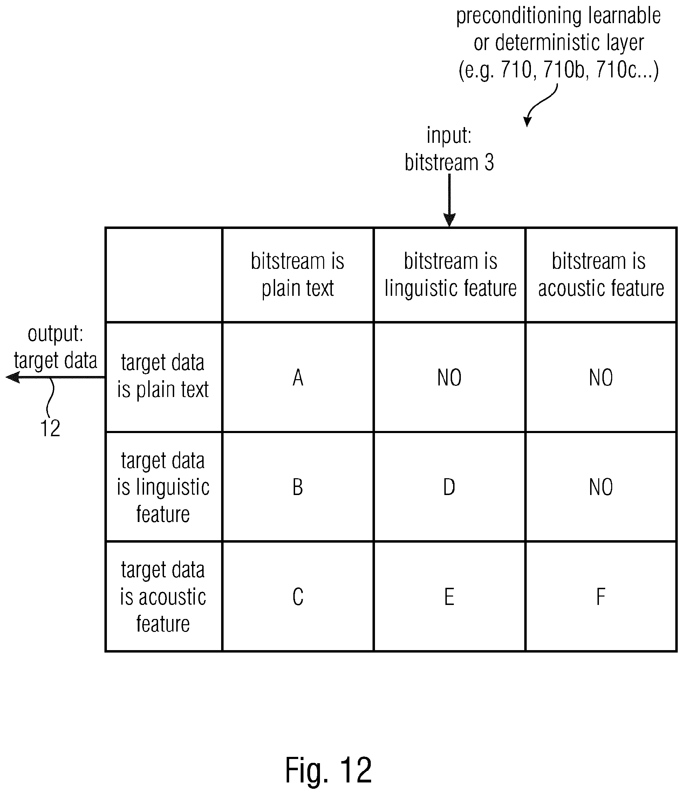

Fig. 12 shows a synoptic table on the several possibilities for instantiating the at least one learnable layer 710 e.g. in a TTS application:

A) In case A, the bitstream 3 inputted to the at least one learnable layer 710 is plain text, and the output (target data 12) from the at least one learnable layer 710 is at least one of a character of text or a word (which is also text). In case A, the at least one learnable layer 710 may perform a selection of text (bitstream 3) among elements of the bitstream 3. Subsequently, the target data 12 (in form of elements of the text of the bitstream 3) will condition the processing to the input signal 14 to obtain the output signal 16 (e.g. in form of an acoustic wave).

B) In case B, the bitstream 3 inputted to the at least one preconditioning learnable layer 710 is plain text, and the output (target data 12) from the at least one learnable layer 710 comprise at least one linguistic feature, e.g. e.g. a linguistic feature among a phoneme, words prosody, intonation, phrase break, and filled pauses obtained from the bitstream 3, etc. In case B, the at least one preconditioning learnable layer 710 may perform a linguistic analysis to elements of the text 112, thereby obtaining at least one linguistic feature among at least one among phoneme, words prosody, intonation, phrase break, and filled pauses, etc. Subsequently, the target data 12 (in form of at least one among phoneme, words prosody, intonation, phrase break, and filled pauses, etc.) will condition the processing to the input signal 14 to obtain the output signal 16 (acoustic wave).

C) In case C, the bitstream 3 inputted to the at least one preconditioning learnable layer 710 is plain text, and the output (target data 12) from the at least one learnable layer 710 comprise at least one acoustic feature, e.g. one acoustic feature among a log-spectrogram, or an MFCC, and a mel-spectrogram obtained from a text. In case C, the at least one preconditioning learnable layer 710 performs an acoustic analysis to elements of the bitstream, thereby obtaining at least one acoustic feature among a log-spectrogram, or an MFCC, and a mel-spectrogram obtained from the bitstream 3. Subsequently, the target data 12 (e.g. in form of at least one among acoustic feature among a log-spectrogram, MFCC, a mel-spectrogram obtained from the text etc.) will condition the processing to the input signal 14 to obtain the output signal 16 (acoustic wave).

D) In case D, the input sequence inputted to the at least one preconditioning learnable layer 710 is a linguistic feature (e.g. at least one among phoneme, words prosody, intonation, phrase break, and filled pause), and the output (target data 12) is also a processed linguistic feature (e.g. at least one among phoneme, words prosody, intonation, phrase break, and filled pause). Subsequently, the target data 12 (in form of at least one among phoneme, words prosody, intonation, phrase break, and filled pauses, etc.) will condition the processing to the input signal 14 to obtain the output signal 16 (acoustic wave).

E) In case E, the bitstream 3 inputted to the at least one preconditioning learnable layer 710, 710b, 710c is a linguistic feature (e.g. at least one among phoneme, words prosody, intonation, phrase break, and filled pause), and the output (target data 12) from the at least one learnable layer 710, 710b, 710c comprise at least one acoustic feature, e.g. one acoustic feature among a log-spectrogram, or an MFCC, and a mel-spectrogram obtained from a text. In case E, the at least one learnable layer 710, 710b, 710c performs an acoustic analysis to elements of the text 112, to obtain at least one acoustic feature among a log-spectrogram, or an MFCC, and a mel-spectrogram. Subsequently, the target data 12 (e.g. in form of at least one among acoustic feature among a log-spectrogram, MFCC, a mel-spectrogram obtained from the text etc.) will condition the processing to the input signal 14 to obtain the output signal 16 (acoustic wave).

F) In case F, the bitstream 3 inputted to the at least one preconditioning learnable layer 710, 710b, 710c is in form of an acoustic feature (e.g. in form of at least one among acoustic feature among a log-spectrogram, MFCC, a mel-spectrogram obtained from the text etc.), and the output (target data 12) is in form of a processed acoustic feature (e.g. in form of at least one among acoustic feature among a log-spectrogram, MFCC, a mel-spectrogram obtained from the text etc.). Subsequently, the target data 12 (e.g. in form of the processed acoustic features, like the at least one among acoustic feature among a log-spectrogram, MFCC, a mel-spectrogram obtained from the text etc.) will condition the processing to the input signal 14 to obtain the output signal 16 (acoustic wave).

Alternatively to the possibilities listed in Fig. 12 for instantiating the at least one learnable layer 710 e.g. in a TTS application, the target data nature may be learned and be a hidden representation of the speech or text and cannot be easily categorized or characterized. The target data 12 is then a form of a latent feature and is a called a latent representation, well suited for conditioning the generator network 770. In this case, whatever the nature of the bitstream (acoustic, linguistic, or textual features), the output of the pre-cond network may be a latent representation made of latent features, i.e., a hidden/learned representation of the speech/text.

Figs. 11a and 7a show an example in which the bitstream 3 (which includes linguistic features) is inputted to the waveform synthesis block 1120 from an external text analysis block 1110, and the bitstream 3 is processed by the at least one learnable layer 710c. Notably, the text analysis block 1110 may be part of the generator 10 or may be external to the generator 10. In some examples, the text analysis block 1110 may be deterministic and the at least one preconditioning layer 710c may be learnable, but different configurations may be provided. Since the bitstream 3 includes linguistic features and the target data 12 include acoustic features, Figs. 11a and 7a pertain to case E of Fig. 12.

Figs. 11b and 7b shows an example in which the text analysis block 1110 is internal to the generator 10 and is embodied by the at least one preconditioning learnable layer 710b. In this case, the at least one preconditioning learnable layer 710b may only perform text analysis and provide target data 12 in the form of acoustic features from the bitstream 3 (which is in form of text 112). Therefore, in Fig. 11b and 7b, we are in case C of Fig. 10.

In general, the at least one learnable preconditioning layer 710b operates to elaborate the bitstream 3 in form of text (or other input sequence obtained from text) more and more, in a processing towards a target data 12 which is more elaborated than the bitstream 3 inputted to the at least one preconditioning learnable layer 710b. The at least one learnable preconditioning layer 710b may also use constraints (e.g. attention function, voice of man/woman, accent, emotional characterization, etc.) which may be absent in the original text. These constraints may be in general provided by the user.

It is noted that, in the cases above and below, the block 1110 and/or the at least one learnable preconditioning layer 710, 710c, 710b may use a statistical model, e.g. performing text analysis and/or using an acoustic model. In addition or in alternative, the block 1110 and/or the at least one learnable preconditioning layer 710, 710c, 710b may use a learnable model, e.g. performing text analysis and/or using an acoustic model. The learnable model may be based, for example, on neural networks, Marckv chains, ect. In further addition or in further alternative, the block 1110 and/or the at least one learnable preconditioning layer 710, 710c, 710b may make use of a rules-based algorithm performing text analysis and/or based on an acoustic model.

The block 1110 and/or the at least one preconditioning layer 710, 710c, 710b may be referred to as "text analysis block" (e.g. when converting text onto at least one linguistic feature) or "audio synthesis block" (e.g. when converting text or at least one linguistic feature onto at least one acoustic features, such as a spectrogram). Anyway, it is maintained that the target data 12 may be in the form of text, linguistic feature, or acoustic feature according to the embodiments.

Notably, Fig. 12 shows that some combinations of conversions are in general not expected. This because conversions from an elaborated feature towards a simple feature (e.g., from a linguistic feature to text or from an acoustic feature to text or a linguistic feature) is not imagined.

### TTS Applications

Fig. 7a shows an example of the generator 10c (decoder) for a TTS application, in which the bitstream 3 is obtained from a text 112, e.g. received in encoded form from a remote transmitter or stored in a storage means, through a text analysis (audio synthesis) 1110 and/or the at least one preconditioning layer 710, 710c, 710b. All the subsequent operations may be understood as being performed by a waveform synthesis block 1120 which permits to obtain the output audio signal 16. Basically, all the operations performed above (e.g. by the implementation shown in Fig. 7) can embody the waveform synthesis block 1120.

Hence, the generator 10c (decoder) may include:

- the at least one preconditioning layer 710, 710c, 710b and
- the waveform synthesis block 1120 (vocoder)
- (in some cases, also block 1110, in other cases block 1110 may be in an external device or not even existing)

Text to speech (TTS) aims to synthesize intelligible and natural sounded speech 16 given a text 112. It could have broad applications in the industry, especially for machine-to-human communication.

The inventive audio generator 10 include different components, among of them the vocoder 1120, in the last stage and includes mainly block(s) for converting acoustic features in audio waveform.

In particular, at block 1110 the text 112 may be analyzed and linguistic features may be extracted from the text 112, e.g. by a text analysis module. Text analysis may include, e.g., multiple tasks like text normalization, word segmentation, prosody prediction and graphene to phoneme. These linguistic features may be, or be comprised in, the bitstream 3.

These linguistics features (bitstream 3) may then be converted, e.g. through an acoustic model, to acoustics features, like MFCCs, fundamental frequency, mel-spectrogram for example, or a combinations of those. This operation may be performed by a preconditioning layer 710c, which is learnable. If the preconditioning layer 710c is a learnable layer, in some examples it may play the role of the preconditioning layer 710 of Fig. 7.

It is worth noting that this classical pipeline can be replaced by end-to-end processing with the introduction of DNNs. For example, it is possible to condition a neural Vocoder directly from linguistic features, or an acoustic model could directly process characters bypassing the test analysis stage. For example, some end-to-end models like Tacotron 1 and 2 were proposed to simplify text analysis modules and directly take character/phoneme sequences as input, while outputting as acoustic features mel-spectrograms.

The current solution can be employed as a TTS system (i.e. including both blocks 1110 and 1120), wherein the target data 12 may include, in some examples, a stream of information or speech representation derived from the text 112. The representation could be for example characters or phonemes derived from a text 112, that means usual inputs of the text analysis block 1110. In this case, a pre-conditioned learnable layer may be used for block 1110 for extracting acoustics features or conditioning features appropriate (bitstream 3) for the neural vocoder (e.g. block 1120). This pre-conditioning layer 1110 usually leverage deep neural networks (DNNs) like an encoder-attention-decoder architecture to map characters or phonemes directly to acoustic features. Alternatively, the representation (target data) 12 could be or include linguistics features, that means phonemes associated with information like prosody, intonation, pauses, etc. In this case, the pre-conditioned learnable layer 1110 can be an acoustic model mapping the linguistics features to acoustics features based on statistical models such as Hidden Markov model (HMM), deep neural network (DNN) or recurrent neural network (RNN). Finally, the target data 12 could include directly acoustics features derived from the text 112, which may be used as conditioning features after a learnable pre-conditioning layer 1110. In an extreme case, the acoustic features in the target data 12 can be used directly as the conditioning features and the pre-conditioning layer bypassed.

The audio decoder (e.g. 10c) may obtain the input signal 14 from at least a time envelope information or time-domain structure derived from the bitstream 3, which in turn has been obtained from the text 112 by the text analysis block 1110.

The audio synthesis block 1110 (text analysis block) of Figs. 11a and 7a is obtained through at least one learnable layer.

In general terms, the bitstream 3 may include acoustic features like log-spectrogram, or a spectrogram, or MFCCs or a mel-spectrogram obtained from a text 112.

In alternative, the bitstream 3 may include linguistics features like phonemes, words prosody, intonation, phrase breaks, or filled pauses obtained from a text.

The bitstream 3 may be derived from a text using at least one of statistical models, learnable models or rules-based algorithm, which may include a text analysis and/or an acoustic model.

In general terms, therefore, the audio synthesis block 1110 which outputs the target data 12 from the text 112 (so that the target data 12 are derived from the text 112) is a learnable block.

In general terms, the target data 12 may have multiple channels, while the text 112 (from which the target data 12 derive) may have one single channel.

Fig. 11a shows an example of generator 10c (which can be an example of the generator of Fig. 7a) in which the target data 12 comprise at least one of the acoustic features like log-spectrogram, or a spectrogram, or MFCCs or a mel-spectrogram obtained from the text 112. Here, the block 1110 may include a text analysis block 1112 (which may be deterministic or learnable) which may provide the bitstream 3. The bitstream 3 may include at least one of linguistic features like phonemes, words prosody, intonation, phrase breaks, or filled pauses obtained from the text 112. A preconditioning layer 710c (e.g. using an acoustic model) may generate the target data 12 e.g. as at least one of acoustic features like log-spectrum, or a spectrogram, or MFCC(s) or mel-spectrogram(s) obtained from the text 112 through block 1110. After that, the waveform synthesis block 1120 (which can be any of the waveform synthesis blocks discussed above, and may include at least one of blocks 702, 71-73, 45) may be used to generate an output audio signal 16. Bock 1120 may, together with blocks 71-73 and 77, be part of block 50 (e.g. 40) as discussed above. The target data 12 may therefore be inputted in the conditional set of learnable layers 71-73 to obtain $\gamma$ (gamma) and $\beta$ (beta) (74, 75), e.g. to be used for the stylistic element 77.

Fig. 11b shows an example of a generator 10b (which may be an example of the generator 10b of Fig. 7b) in which the bitstream 3 is text 112 or part of text. The target data may be, for example, acoustic features (e.g. spectrograms, such as mel-spectrograms). The waveform synthesis block 1120 (e.g. vocoder 1120) can output an audio signal 16. The waveform synthesis block 1120 can be any of those described in the Figs. 1-8 discussed above, but in particular like in Fig. 7b. In this case, for example, the target data 12 can be directly inputted in the conditional set of learnable layers 71-73 to obtain $\gamma$ (gamma) and $\beta$ (beta) (74, 75), e.g. to be used for the stylistic element 77.

In general terms, any of the audio generators above (e.g. 10, 10b, 10c), the particular any of the text analysis blocks 1110 (e.g. any of Figs. 8 or 9a-9c) may derive the target data 12 from a text using at least one of statistical models, learnable models or rules-based algorithm, e.g. comprising a text analysis and/or an acoustic model.

The target data 12 is obtained non-deterministically by the at least one preconditioning layer 710, 1710b, 710c; block 1110 and/or 1120 is a learnable layer or a plurality of learnable layers.

In some examples, at least one of blocks 1110 and 1120 may comprise both one learnable layer and one deterministic layer.

It is noted that the examples of Figs. 8a-8c may be used for a TTS application. The pitch data 3b (e.g. at least one parameter 3b indicating the pitch lag of the audio signal) or other data 3b and the filter data 3a (e.g. MFCCs, spectral envelope data) may be obtained from the bitstream 3, e.g. when the bitstream 3 is in the form of acoustic features (e.g. case F in Fig. 10). This also applies to the "first option" of Figs. 7, 7a, 7b, so that the input signal 14 inputted to the first data provisioner 702 (e.g. to obtain first data, latent, prior 15) may be obtained from the pitch data 3b, while the filter data (spectral envelope) 3a may be used (e.g. in the frame-by-frame branch) to be inputted onto the preconditioning learnable layer 710.

## Further examples

Generally, examples may be implemented as a computer program product with program instructions, the program instructions being operative for performing one of the methods when the computer program product runs on a computer. The program instructions may for example be stored on a machine readable medium.

Other examples comprise the computer program for performing one of the methods described herein, stored on a machine readable carrier. In other words, an example of method is, therefore, a computer program having a program instructions for performing one of the methods described herein, when the computer program runs on a computer.

A further example of the methods is, therefore, a data carrier medium (or a digital storage medium, or a computer-readable medium) comprising, recorded thereon, the computer program for performing one of the methods described herein. The data carrier medium, the digital storage medium or the recorded medium are tangible and/or non-transitionary, rather than signals which are intangible and transitory.

A further example of the method is, therefore, a data stream or a sequence of signals representing the computer program for performing one of the methods described herein. The data stream or the sequence of signals may for example be transferred via a data communication connection, for example via the Internet.

A further example comprises a processing means, for example a computer, or a programmable logic device performing one of the methods described herein.

A further example comprises a computer having installed thereon the computer program for performing one of the methods described herein.

A further example comprises an apparatus or a system transferring (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some examples, a programmable logic device (for example, a field programmable gate array) may be used to perform some or all of the functionalities of the methods described herein. In some examples, a field programmable gate array may cooperate with a microprocessor in order to perform one of the methods described herein. Generally, the methods may be performed by any appropriate hardware apparatus.

The above described examples are merely illustrative for the principles discussed above. It is understood that modifications and variations of the arrangements and the details described herein will be apparent. It is the intent, therefore, to be limited by the scope of the claims and not by the specific details presented by way of description and explanation of the examples herein.

Equal or equivalent elements or elements with equal or equivalent functionality are denoted in the following description by equal or equivalent reference numerals even if occurring in different figures.

## REFERENCES

[1] A. van den Oord, S. Dieleman, H. Zen, K. Simonyan, et al., "WaveNet: A Generative Model for Raw Audio," arXiv:1609.03499, 2016.

[2] R. Prenger, R. Valle, and B. Catanzaro, "Waveglow: A Flow-based Generative Network for Speech Synthesis," in IEEE International Conference on Acoustics, Speech and Signal Processing (ICASSP), 2019, pp. 3617-3621.

[3] N. Kalchbrenner, E. Elsen, K. Simonyan, S. Noury, et al., "Ef-ficient neural audio synthesis," arXiv:1802.08435, 2018.

[4] J. Valin and J. Skoglund, "LPCNET: Improving Neural Speech Synthesis through Linear Prediction," in IEEE International Conference on Acoustics, Speech and Signal Processing (ICASSP), 2019, pp. 5891-5895.

[5] K. Kumar, R. Kumar, de T. Boissiere, L. Gestin, et al., "MelGAN: Generative Adversarial Networks for Conditional Waveform Synthesis," in Advances in NeurIPS 32, 2019, pp. 14 910-14 921.

[6] W. B. Kleijn, F. S. C. Lim, A. Luebs, J. Skoglund, F. Stimberg, Q. Wang, and T. C. Walters, "Wavenet based low rate speech coding," in 2018 IEEE International Conference on Acoustics, Speech and Signal Processing (ICASSP), 2018, pp. 676-680.

[7] J.-M. Valin and J. Skoglund, "A real-time wideband neural vocoder at 1.6 kb/s using lpcnet," 2019.

[8] J. Klejsa, P. Hedelin, C. Zhou, R. Fejgin, and L. Villemoes, "High-quality speech coding with sample rnn," in ICASSP 2019 - 2019 IEEE International Conference on Acoustics, Speech and Signal Processing (ICASSP), 2019, pp. 7155-7159.

[9] W. B. Kleijn, A. Storus, M. Chinen, T. Denton, F. S. C. Lim, A. Luebs, J. Skoglund, and H. Yeh, "Generative speech coding with predictive variance regularization," 2021.

[10] A. Mustafa, N. Pia, and G. Fuchs, "Stylemelgan: An efficient high-fidelity adversarial vocoder with temporal adaptive normalization," 2021.

[11] O. Rybakov, N. Kononenko, N. Subrahmanya, M. Visontai, and S. Laurenzo, "Streaming keyword spotting on mobile de-vices," 2020.

[12] C. Yu, H. Lu, N. Hu, M. Yu, C. Weng, K. Xu, P. Liu, D. Tuo, S. Kang, G. Lei, D. Su, and D. Yu, "Durian: Duration in-formed attention network for multimodal synthesis," 2019.

[13] G. Yang, S. Yang, K. Liu, P. Fang, W. Chen, and L. Xie, "Multi-band melgan: Faster waveform generation for high-quality text-to-speech," 2020

## Claims

1. Audio decoder (10), configured to generate an audio signal (16) from a bitstream (3), the bitstream (3) representing the audio signal (16), the audio signal being subdivided in a sequence of frames, the audio decoder (10) comprising:

   a first data provisioner (702) configured to provide, for a given frame, first data (15) derived from an input signal (14) from an external or internal source or from the bitstream (3), wherein the first data (15) has multiple channels;
   a first processing block (40, 50, 50a-50h), configured, for the given frame, to receive the first data (15) and to output first output data (69) in the given frame, wherein the first output data (69) comprises a plurality of channels (47), and
   a second processing block (45), configured, for the given frame, to receive, as second data, the first output data (69) or data derived from the first output data (69),
   wherein the first processing block (50) comprises:

26

at least one preconditioning learnable layer (710) configured to receive the bitstream (3) and, for the given frame, output target data (12) representing the audio signal (16) in the given frame with multiple channels and multiple samples for the given frame;

at least one conditioning learnable layer (71, 72, 73) configured, for the given frame, to process the target data (12) to obtain conditioning feature parameters (74, 75) for the given frame; and

a styling element (77), configured to apply the conditioning feature parameters (74, 75) to the first data (15, 59a) or normalized first data (59, 76'); and

wherein the second processing block (45) is configured to combine the plurality of channels (47) of the second data (69) to obtain the audio signal (16),

**characterized in that** the first processing block (50) is configured to up-sample the first data (15) from a first number of samples for the given frame to a second number of samples for the given frame greater than the first number of samples.

2. The decoder of claim 1, wherein the second processing block (46) is configured to up-sample the second data (69) obtained from the first processing block (40) from the second number of samples for the given frame to a third number of samples for the given frame greater than the second number of samples.

3. The decoder of any of the preceding claims, configured to reduce the number of channels of the first data (15) from a first number of channels to a second number of channels of the first output data (69) which is lower than the first number of channels.

4. The decoder of any of the preceding claims, wherein the second processing block (45) is configured to reduce the number of channels of the first output data (69), obtained from the first processing block (40), from a second number of channels to a third number of channels of the audio signal (16), wherein the third number of channels is lower than the second number of channels.

5. The audio decoder of any of the preceding claims, configured to obtain the input signal (14) from the bitstream (3, 3b).

6. The audio decoder of any of the preceding claims, configured to obtain the input signal (14) from at least one parameter (3b) of the bitstream (3) associated to the given frame.

7. The audio decoder of any of the preceding claims, configured to obtain the input signal (14) from at least a parameter (3b) indicating the pitch lag of the audio signal (16), or other pitch data, in the given frame.

8. The audio decoder of claim 7, configured to obtain the input signal (14) by multiplication of the pitch lag by the pitch correlation.

9. The audio decoder of any of claims 1-4, configured to obtain the input signal from noise (14).

10. The audio decoder of any of the preceding claims, wherein the at least one preconditioning learnable layer (710) is configured to provide the target data (12) as a spectrogram.

11. The audio decoder of any of the preceding claims, wherein the at least one preconditioning learnable layer (710) is configured to provide the target data (12) as a mel-spectrogram.

12. The audio decoder of any of the preceding claims, wherein the at least one preconditioning learnable layer (710) is configured to derive the target data (12) from cepstrum data encoded in the bitstream (3).

13. The audio decoder of any of the preceding claims, wherein the at least one preconditioning learnable layer (710) is configured to derive the target data (12) from at least filter data (3a) encoded in the bitstream (3) associated to the given frame, wherein the filter data (3a) include a spectral envelope data encoded in the bitstream (3) associated to the given frame.

14. The audio decoder of any of the preceding claims, wherein the at least one preconditioning learnable layer (710) is configured to derive the target data (12) from at least one of excitation data, harmonicity data, periodicity data, long-term prediction data encoded in the bitstream (3).

15. The audio decoder of any of the preceding claims, wherein the at least one preconditioning learnable layer (710) is configured to derive the target data (12) from at least pitch data (3b) encoded in the bitstream (3).

16. The audio decoder of claim 15, wherein the at least one preconditioning learnable layer (710) is configured to derive the target data (12, 813) at least by multiplying (812) the pitch lag by the pitch correlation.

17. The audio decoder of claim 16, wherein the at least one preconditioning learnable layer (710) is configured to derive the target data (12) at least by convoluting the multiplication of the pitch lag by the pitch correlation and spectral envelope data.

18. The audio decoder of any of claims 1-15, wherein the at least one preconditioning learnable layer (710) is configured to derive the target data (12) by at least convoluting the pitch lag, the pitch correlation, and spectral envelope data.

19. The audio decoder of any of the preceding claims, wherein the at least one preconditioning learnable layer (710) is configured to derive the target data (12) from LPC coefficients (3a, 3b), spectrogrum-based coefficients and/or cepstrum-based coefficients obtained from the bitstream (3).

20. The audio decoder of any of the preceding claims, wherein the target data (12) is a convolution map, and the at least one preconditioning learnable layer (710) is configured to perform a convolution onto the convolution map.

21. The audio decoder of claim 20, wherein the target data (12) includes cepstrum data (3a) of the audio signal (16) in the given frame.

22. The audio decoder of any of the preceding claims, wherein the input signal is obtained from at least correlation data of the audio signal (16) in the given frame.

23. The audio decoder of any of the preceding claims, wherein the target data is obtained from pitch data of the audio signal (16) in the given frame.

24. The audio decoder of any of the preceding claims, wherein the target data includes a multiplied value obtained by multiplying pitch data of the audio signal (16) in the given frame and correlation data of the audio signal in the given frame.

25. The audio decoder of any of the preceding claims, wherein the at least one preconditioning learnable layer (710) is configured to perform at least one convolution on a bitstream model obtained by juxtaposing at least one cepstrum data obtained from the bitstream, or a processed version thereof.

26. The audio decoder of any of the preceding claims, wherein the at least one preconditioning learnable layer (710) is configured to perform at least one convolution on a bitstream model obtained by juxtaposing at least one parameter obtained from the bitstream.

27. The audio decoder of any of the preceding claims, wherein the at least one preconditioning learnable layer (710) is configured to perform at least one convolution on a convolution map (712, 716, 720, 724, 816, 820, 824, 813, 856) obtained from the bitstream (3), or a processed version thereof.

28. The audio decoder of claim 27, wherein the convolution map is obtained by juxtaposing parameters associated to subsequent frames.

29. The audio decoder of any of the preceding claims, wherein the first data provisioner is configured to perform a convolution on a bitstream model obtained by juxtaposing one set of coded parameters obtained from the given frame of the bitstream adjacent to the immediately preceding frame of the bitstream.

30. Audio decoder according to any of the preceding claims, wherein the conditioning set of learnable layers comprises one or at least two convolution layers (71-73).

31. Audio decoder according to any of the preceding claims, wherein a first convolution layer (71-73) is configured to convolute the target data (12) or up-sampled target data to obtain first convoluted data (71') using a first activation function.

**32.** Audio decoder according to any of the preceding claims, wherein the conditioning set of learnable layers (71-73) and the styling element (77) are part of a weight layer in a residual block (50, 50a-50h) of a neural network comprising one or more residual blocks (50, 50a-50h).

**33.** Audio decoder according to any of the preceding claims, wherein the target data (12) is up-sampled by a factor of a power of 2.

**34.** Audio decoder according to claim 33, wherein the target data (12) is up-sampled (70) by non-linear interpolation.

**35.** Audio decoder according to any of the preceding claims, wherein convolution operations (61b, 62b) run with maximum dilation factor of 2.

**36.** Audio decoder according to any one of the preceding claims, comprising eight first processing blocks (50a-50h) and one second processing block (45).

**37.** Method for decoding an audio signal (1, 16) from a bitstream (3) representing the audio signal (16), the method using an input signal (14), the audio signal (1, 16) being subdivided into a plurality of frames, the method comprising:

from the bitstream (3), obtaining target data (15) for a given frame, by at least one preconditioning layer (710) of a first processing block (40), the target data (15) representing the audio signal (16) and having two dimensions; receiving, by the first processing block (40, 50, 50a-50h) and for each sample of the given frame, first data (12) derived from the input signal (14);

processing, by a conditioning set of learnable layers (71, 72, 73) of the first processing block (40, 50), the target data (12) to obtain conditioning feature parameters (74, 75); and applying, by a styling element (77) of the first processing block (50), the conditioning feature parameters (74, 75) to the first data (15, 59) or normalized first data (76');

outputting, by the first processing block (40, 50), first output data (69) comprising a plurality of channels (47); receiving, by a second processing block (45), as second data, the first output data (69) or data derived from the first output data (69); and combining, by the second processing block (45), the plurality of channels (47) of the second data to obtain the audio signal (16), **characterized in that** the first processing block (40, 50) is configured to up-sample the first data (15) from a first number of samples for the given frame to a second number of samples for the given frame greater than the first number of samples.

**Patentansprüche**

**1.** Audiodecodierer (10), der dazu konfiguriert ist, ein Audiosignal (16) aus einem Bitstrom (3) zu erzeugen, wobei der Bitstrom (3) das Audiosignal (16) darstellt, wobei das Audiosignal in eine Sequenz von Rahmen unterteilt ist, wobei der Audiodecodierer (10) folgende Merkmale aufweist:

ein erstes Datenbereitstellungselement (702), das dazu konfiguriert ist, für einen bestimmten Rahmen erste Daten (15), die von einem Eingangssignal (14) hergeleitet sind, von einer externen oder internen Quelle oder von dem Bitstrom (3) bereitzustellen, wobei die ersten Daten (15) mehrere Kanäle aufweisen; einen ersten Verarbeitungsblock (40, 50, 50a-50h), der dazu konfiguriert ist, für den bestimmten Rahmen die ersten Daten (15) zu empfangen und erste Ausgangsdaten (69) in dem bestimmten/gegebenen Rahmen auszugeben, wobei die ersten Ausgangsdaten (69) eine Mehrzahl von Kanälen (47) aufweisen, und einen zweiten Verarbeitungsblock (45), der dazu konfiguriert ist, für einen bestimmten Rahmen als zweite Daten die ersten Ausgangsdaten (69) oder Daten, die von den ersten Ausgangsdaten (69) hergeleitet sind, zu empfangen, wobei der erste Verarbeitungsblock (50) folgende Merkmale aufweist:

zumindest eine lernfähige Vorkonditionierungsschicht (710), die dazu konfiguriert ist, den Bitstrom (3) zu empfangen und für den bestimmten Rahmen Zieldaten (12), die das Audiosignal (16) in dem bestimmten Rahmen darstellen, mit mehreren Kanälen und mehreren Abtastwerten für den bestimmten Rahmen auszugeben;

zumindest eine lernfähige Konditionierungsschicht (71, 72, 73), die dazu konfiguriert ist, für den bestimmten Rahmen die Zieldaten 12 zu verarbeiten, um Konditionierungsmerkmalparameter (74, 75) für den bestimmten Rahmen zu erhalten; und

ein Gestaltungselement (77), das dazu konfiguriert ist, die Konditionierungsmerkmalparameter (74, 75) auf die ersten Daten (15, 59a) oder normierte erste Daten (59, 76') anzuwenden; und

wobei der zweite Verarbeitungsblock (45) dazu konfiguriert ist, die Mehrzahl von Kanälen (47) der zweiten Daten (69) zu kombinieren, um das Audiosignal (16) zu erhalten,

**dadurch gekennzeichnet, dass** der erste Verarbeitungsblock (50) dazu konfiguriert ist, die ersten Daten (15) von einer ersten Anzahl von Abtastwerten für den bestimmten Rahmen bis zu einer zweiten Anzahl von Abtastwerten für den bestimmten Rahmen, die größer ist als die erste Anzahl von Abtastwerten, aufwärts abzutasten.

2.  Decodierer gemäß Anspruch 1, bei dem der zweite Verarbeitungsblock (46) dazu konfiguriert ist, die zweiten Daten (69), die von dem ersten Verarbeitungsblock (40) erhalten werden, von der zweiten Anzahl von Abtastwerten für den bestimmten Rahmen bis zu einer dritten Anzahl von Abtastwerten für den bestimmten Rahmen, die größer ist als die zweite Anzahl von Abtastwerten, aufwärts abzutasten.

3.  Decodierer gemäß einem der vorherigen Ansprüche, der dazu konfiguriert ist, die Anzahl von Kanälen der ersten Daten (15) von einer ersten Anzahl von Kanälen auf/bis zu einer zweiten Anzahl von Kanälen der ersten Ausgangsdaten (69), die niedriger ist als die erste Anzahl von Kanälen, zu reduzieren.

4.  Decodierer gemäß einem der vorherigen Ansprüche, bei dem der zweite Verarbeitungsblock (45) dazu konfiguriert ist, die Anzahl von Kanälen der ersten Ausgangsdaten (69), die von dem ersten Verarbeitungsblock (40) erhalten werden, von einer zweiten Anzahl von Kanälen auf eine dritte Anzahl von Kanälen des Audiosignals (16) zu reduzieren, wobei die dritte Anzahl von Kanälen niedriger ist als die zweite Anzahl von Kanälen.

5.  Audiodecodierer gemäß einem der vorherigen Ansprüche, der dazu konfiguriert ist, das Eingangssignal (14) aus dem Bitstrom (3, 3b) zu erhalten.

6.  Audiodecodierer gemäß einem der vorherigen Ansprüche, der dazu konfiguriert ist, das Eingangssignal (14) aus zumindest einem Parameter (3b) des Bitstroms (3) zu erhalten, der dem bestimmten Rahmen zugeordnet ist.

7.  Audiodecodierer gemäß einem der vorherigen Ansprüche, der dazu konfiguriert ist, das Eingangssignal (14) aus zumindest einem Parameter (3b), der den Tonhöheversatz des Audiosignals (16) oder andere Tonhöhedaten anzeigt, in dem bestimmten Rahmen zu erhalten.

8.  Audiodecodierer gemäß Anspruch 7, der dazu konfiguriert ist, das Eingangssignal (14) zu erhalten durch Multiplikation des Tonhöheversatzes mit der Tonhöhekorrelation.

9.  Audiodecodierer gemäß einem der Ansprüche 1 bis4, der dazu konfiguriert ist, das Eingangssignal aus Rauschen (14) zu erhalten.

10. Audiodecodierer gemäß einem der vorherigen Ansprüche, bei dem die zumindest eine lernfähige Vorkonditionierungsschicht (710) dazu konfiguriert ist, die Zieldaten (12) als ein Spektrogramm bereitzustellen.

11. Audiodecodierer gemäß einem der vorherigen Ansprüche, bei dem die zumindest eine lernfähige Vorkonditionierungsschicht (710) dazu konfiguriert ist, die Zieldaten (12) als ein Mel-Spektrogramm bereitzustellen.

12. Audiodecodierer gemäß einem der vorherigen Ansprüche, bei dem die zumindest eine lernfähige Vorkonditionierungsschicht (710) dazu konfiguriert ist, die Zieldaten (12) von Cepstrum-Daten herzuleiten, die in dem Bitstrom (3) codiert sind.

13. Audiodecodierer gemäß einem der vorherigen Ansprüche, bei dem die zumindest eine lernfähige Vorkonditionierungsschicht (710) dazu konfiguriert ist, die Zieldaten (12) von zumindest Filterdaten (3a) herzuleiten, die in dem Bitstrom (3) codiert sind, der dem bestimmten Rahmen zugeordnet ist, wobei die Filterdaten (3a) Spektralhüllkurvendaten umfassen, die in dem Bitstrom (3) codiert sind, der dem bestimmten Rahmen zugeordnet ist.

14. Audiodecodierer gemäß einem der vorherigen Ansprüche, bei dem die zumindest eine lernfähige Vorkonditionierungsschicht (710) dazu konfiguriert ist, die Zieldaten (12) von zumindest einem von Anregungsdaten, Harmonizitätsdaten, Periodizitätsdaten, Langzeitvorhersagedaten, die in dem Bitstrom (3) codiert sind, herzuleiten.

15. Audiodecodierer gemäß einem der vorherigen Ansprüche, bei dem die zumindest eine lernfähige Vorkonditionierungsschicht (710) dazu konfiguriert ist, die Zieldaten (12) von zumindest Tonhöhedaten (3b) herzuleiten, die in dem Bitstrom (3) codiert sind.

16. Audiodecodierer gemäß Anspruch 15, bei dem die zumindest eine lernfähige Vorkonditionierungsschicht (710) dazu konfiguriert ist, die Zieldaten (12, 813) herzuleiten zumindest durch Multiplizieren (812) des Tonhöheversatzes mit der Tonhöhekorrelation.

17. Audiodecodierer gemäß Anspruch 16, bei dem die zumindest eine lernfähige Vorkonditionierungsschicht (710) dazu konfiguriert ist, die Zieldaten (12) herzuleiten zumindest durch Falten der Multiplikation des Tonhöheversatzes mit der Tonhöhekorrelation und Spektralhüllkurvendaten.

18. Audiodecodierer gemäß einem der Ansprüche 1 bis 15, bei dem die zumindest eine lernfähige Vorkonditionierungsschicht (710) dazu konfiguriert ist, die Zieldaten (12) herzuleiten durch zumindest Falten des Tonhöheversatzes, der Tonhöhekorrelation und Spektralhüllkurvendaten.

19. Audiodecodierer gemäß einem der vorherigen Ansprüche, bei dem die zumindest eine lernfähige Vorkonditionierungsschicht (710) dazu konfiguriert ist, die Zieldaten (12) von LPC-Koeffizienten (3a, 3b), Spektrogramm-basierten Koeffizienten und/oder Cepstrum-basierten Koeffizienten, die aus dem Bitstrom (3) erhalten werden, herzuleiten.

20. Audiodecodierer gemäß einem der vorherigen Ansprüche, bei dem die Zieldaten (12) eine Faltkarte sind und die zumindest eine lernfähige Vorkonditionierungsschicht (710) dazu konfiguriert ist, eine Faltung auf die Faltkarte durchzuführen.

21. Audiodecodierer gemäß Anspruch 20, bei dem die Zieldaten (12) Cepstrum-Daten (3a) des Audiosignals (16) in dem bestimmten Rahmen aufweisen.

22. Audiodecodierer gemäß einem der vorherigen Ansprüche, bei dem das Eingangssignal aus zumindest Korrelationsdaten des Audiosignals (16) in dem bestimmten Rahmen erhalten wird.

23. Audiodecodierer gemäß einem der vorherigen Ansprüche, bei dem die Zieldaten aus Tonhöhedaten des Audiosignals (16) in dem bestimmten Rahmen erhalten werden.

24. Audiodecodierer gemäß einem der vorherigen Ansprüche, bei dem die Zieldaten einen multiplizierten Wert umfassen, der erhalten wird durch Multiplizieren von Tonhöhedaten des Audiosignals (16) in dem bestimmten Rahmen und Korrelationsdaten des Audiosignals in dem bestimmten Rahmen.

25. Audiodecodierer gemäß einem der vorherigen Ansprüche, bei dem die zumindest eine lernfähige Vorkonditionierungsschicht (710) dazu konfiguriert ist, zumindest eine Faltung an einem Bitstrommodell durchzuführen, das erhalten wird durch Nebeneinanderstellen zumindest eines Cepstrum-Datums, das aus dem Bitstrom erhalten wird, oder einer verarbeiteten Version desselben.

26. Audiodecodierer gemäß einem der vorherigen Ansprüche, bei dem die zumindest eine lernfähige Vorkonditionierungsschicht (710) dazu konfiguriert ist, zumindest eine Faltung an einem Bitstrommodell durchzuführen, das erhalten wird durch Nebeneinanderstellen zumindest eines Parameters, der aus dem Bitstrom erhalten wird.

27. Audiodecodierer gemäß einem der vorherigen Ansprüche, bei dem die zumindest eine lernfähige Vorkonditionierungsschicht (710) dazu konfiguriert ist, zumindest eine Faltung an einer Faltkarte (712, 716, 720, 724, 816, 820, 824, 813, 856) durchzuführen, die aus dem Bitstrom (3) erhalten wird, oder einer verarbeiteten Version desselben.

28. Audiodecodierer gemäß Anspruch 27, bei dem die Faltkarte erhalten wird durch Nebeneinanderstellen von Parametern, die nachfolgenden Rahmen zugeordnet sind.

29. Audiodecodierer gemäß einem der vorherigen Ansprüche, bei dem das erste Datenbereitstellungselement dazu konfiguriert ist, eine Faltung an einem Bitstrommodell durchzuführen, das erhalten wird durch Nebeneinanderstellen einer Menge codierter Parameter, die aus dem bestimmten Rahmen des Bitstroms erhalten werden, neben den unmittelbar vorhergehenden Rahmen des Bitstroms.

30. Audiodecodierer gemäß einem der vorherigen Ansprüche, bei dem die Konditionierungsmenge lernfähiger Schichten eine oder zumindest zwei Faltungsschichten (71-73) aufweist.

31. Audiodecodierer gemäß einem der vorherigen Ansprüche, bei dem eine erste Faltungsschicht (71-73) dazu konfiguriert ist, die Zieldaten (12) oder aufwärts abgetastete Zieldaten zu falten, um erste gefaltete Daten (71') zu erhalten, und zwar unter Verwendung einer ersten Aktivierungsfunktion.

32. Audiodecodierer gemäß einem der vorherigen Ansprüche, bei dem die Konditionierungsmenge lernfähiger Schichten (71-73) und das Gestaltungselement (77) Teil einer Gewichtsschicht in einem Restblock (50, 50a-50h) eines neuronalen Netzes sind, das einen oder mehr Restblöcke (50, 50a-50h) aufweist.

33. Audiodecodierer gemäß einem der vorherigen Ansprüche, bei dem die Zieldaten (12) um einen Faktor einer Potenz von 2 aufwärts abgetastet sind.

34. Audiodecodierer gemäß Anspruch 33, bei dem die Zieldaten (12) durch nicht-lineare Interpolation aufwärts abgetastet (70) sind.

35. Audiodecodierer gemäß einem der vorherigen Ansprüche, bei dem Faltungsoperationen (61b, 62b) mit einem maximalen Erweiterungsfaktor/Streckungsfaktor von 2 ablaufen.

36. Audiodecodierer gemäß einem der vorherigen Ansprüche, der acht erste Verarbeitungsblöcke (50a-50h) und einen zweiten Verarbeitungsblock (45) aufweist.

37. Verfahren zum Decodieren eines Audiosignals (1, 16) aus einem Bitstrom (3), der das Audiosignal (16) darstellt, wobei das Verfahren ein Eingangssignal (14) verwendet, wobei das Audiosignal (1, 16) in eine Mehrzahl von Rahmen unterteilt ist, wobei das Verfahren folgende Schritte aufweist:

Erhalten von Zieldaten (15) für einen bestimmten Rahmen durch zumindest eine Vorkonditionierungsschicht (710) eines ersten Verarbeitungsblocks (40) aus dem Bitstrom (3), wobei die Zieldaten (15) das Audiosignal (16) darstellen und zwei Dimensionen aufweisen;
Empfangen, durch den ersten Verarbeitungsblock (40, 50, 50a-50h) und für jeden Abtastwert des bestimmten Rahmens, von ersten Daten (12), die von dem Eingangssignal (14) hergeleitet sind;

Verarbeiten, durch eine Konditionierungsmenge lernfähiger Schichten (71, 72, 73) des ersten Verarbeitungsblocks (40, 50), der Zieldaten (12), um Konditionierungsmerkmalsparameter (74, 75) zu erhalten; und
Anwenden, durch ein Gestaltungselement (77) des ersten Verarbeitungsblocks (50), der Konditionierungsmerkmalsparameter (74, 75) auf die ersten Daten (15, 59) oder normierten ersten Daten (76');

Ausgeben, durch den ersten Verarbeitungsblock (40, 50), der ersten Ausgangsdaten (69), die eine Mehrzahl von Kanälen (47) aufweisen;
Empfangen, durch einen zweiten Verarbeitungsblock (45), der ersten Ausgangsdaten (69) oder Daten, die von den ersten Ausgangsdaten (69) hergeleitet sind, als zweite Daten; und
Kombinieren, durch den zweiten Verarbeitungsblock (45), der Mehrzahl von Kanälen (47) der zweiten Daten, um das Audiosignal (16) zu erhalten
**dadurch gekennzeichnet, dass** der erste Verarbeitungsblock (50) dazu konfiguriert ist, die ersten Daten (15) von einer ersten Anzahl von Abtastwerten für den bestimmten Rahmen bis zu einer zweiten Anzahl von Abtastwerten für den bestimmten Rahmen, die größer ist als die erste Anzahl von Abtastwerten, aufwärts abzutasten.

## Revendications

1. Décodeur audio (10), configuré pour générer un signal audio (16) à partir d'un train de bits (3), le train de bits (3) représentant le signal audio (16), le signal audio (16) étant subdivisé en une séquence de trames, le décodeur audio (10) comprenant :

un premier fournisseur de données (702) configuré pour fournir, pour une trame donnée, des premières données (15) dérivées d'un signal d'entrée (14) provenant d'une source externe ou interne ou du train de bits (3), dans lequel les premières données (15) présentent de multiples canaux ;

un premier bloc de traitement (40, 50, 50a-50h), configuré, pour la trame donnée, pour recevoir les premières données (15) et pour délivrer en sortie des premières données de sortie (69) dans la trame donnée, dans lequel les premières données de sortie (69) comprennent une pluralité de canaux (47), et

un second bloc de traitement (45), configuré, pour la trame donnée, pour recevoir, en tant que secondes données, les premières données de sortie (69) ou des données dérivées des premières données de sortie (69),

dans lequel le premier bloc de traitement (50) comprend :

au moins une couche apprenable de préconditionnement (710) configurée pour recevoir le train de bits (3) et, pour la trame donnée, délivrer en sortie des données cibles (12) représentant le signal audio (16) dans la trame donnée avec de multiples canaux et de multiples échantillons pour la trame donnée ;

au moins une couche apprenable de conditionnement (71, 72, 73) configurée, pour la trame donnée, pour traiter les données cibles (12) afin d'obtenir des paramètres de caractéristique de conditionnement (74, 75) pour la trame donnée ; et

un élément de stylisation (77), configuré pour appliquer les paramètres de caractéristique de conditionnement (74, 75) aux premières données (15, 59a) ou à des premières données normalisées (59, 76') ; et

dans lequel le second bloc de traitement (45) est configuré pour combiner la pluralité de canaux (47) des secondes données (69) afin d'obtenir le signal audio (16),

**caractérisé en ce que** le premier bloc de traitement (50) est configuré pour suréchantillonner les premières données (15) depuis un premier nombre d'échantillons pour la trame donnée à un deuxième nombre d'échantillons pour la trame donnée supérieur au premier nombre d'échantillons.

2. Décodeur selon la revendication 1, dans lequel le second bloc de traitement (46) est configuré pour suréchantillonner les secondes données (69) obtenues à partir du premier bloc de traitement (40) depuis le deuxième nombre d'échantillons pour la trame donnée à un troisième nombre d'échantillons pour la trame donnée supérieur au deuxième nombre d'échantillons.

3. Décodeur selon l'une quelconque des revendications précédentes, configuré pour réduire le nombre de canaux des premières données (15) depuis un premier nombre de canaux à un deuxième nombre de canaux des premières données de sortie (69) qui est inférieur au premier nombre de canaux.

4. Décodeur selon l'une quelconque des revendications précédentes, dans lequel le second bloc de traitement (45) est configuré pour réduire le nombre de canaux des premières données de sortie (69), obtenues à partir du premier bloc de traitement (40), depuis un deuxième nombre de canaux à un troisième nombre de canaux du signal audio (16), dans lequel le troisième nombre de canaux est inférieur au deuxième nombre de canaux.

5. Décodeur audio selon l'une quelconque des revendications précédentes, configuré pour obtenir le signal d'entrée (14) à partir du train de bits (3, 3b).

6. Décodeur audio selon l'une quelconque des revendications précédentes, configuré pour obtenir le signal d'entrée (14) à partir d'au moins un paramètre (3b) du train de bits (3) associé à la trame donnée.

7. Décodeur audio selon l'une quelconque des revendications précédentes, configuré pour obtenir le signal d'entrée (14) à partir d'au moins un paramètre (3b) indiquant le délai tonal du signal audio (16), ou d'autres données tonales, dans la trame donnée.

8. Décodeur audio selon la revendication 7, configuré pour obtenir le signal d'entrée (14) par la multiplication du délai tonal par la corrélation tonale.

9. Décodeur audio selon l'une quelconque des revendications 1-4, configuré pour obtenir le signal d'entrée à partir du bruit (14).

10. Décodeur audio selon l'une quelconque des revendications précédentes, dans lequel la au moins une couche apprenable de préconditionnement (710) est configurée pour fournir les données cibles (12) en tant que spectrogramme.

11. Décodeur audio selon l'une quelconque des revendications précédentes, dans lequel la au moins une couche apprenable de préconditionnement (710) est configurée pour fournir les données cibles (12) en tant que spectrogramme mel.

12. Décodeur audio selon l'une quelconque des revendications précédentes, dans lequel la au moins une couche apprenable de préconditionnement (710) est configurée pour dériver les données cibles (12) de données de cepstre codées dans le train de bits (3).

13. Décodeur audio selon l'une quelconque des revendications précédentes, dans lequel la au moins une couche apprenable de préconditionnement (710) est configurée pour dériver les données cibles (12) d'au moins des données de filtre (3a) codées dans le train de bits (3) associé à la trame donnée, dans lequel les données de filtre (3a) incluent une donnée d'enveloppe spectrale codée dans le train de bits (3) associée à la trame donnée.

14. Décodeur audio selon l'une quelconque des revendications précédentes, dans lequel la au moins une couche apprenable de préconditionnement (710) est configurée pour dériver les données cibles (12) d'au moins une parmi des données d'excitation, des données d'harmonicité, des données de périodicité, des données de prédiction à long terme codées dans le train de bits (3).

15. Décodeur audio selon l'une quelconque des revendications précédentes, dans lequel la au moins une couche apprenable de préconditionnement (710) est configurée pour dériver les données cibles (12) d'au moins des données tonales (3b) codées dans le train de bits (3).

16. Décodeur audio selon la revendication 15, dans lequel la au moins une couche apprenable de préconditionnement (710) est configurée pour dériver les données cibles (12, 813) au moins en multipliant (812) le délai tonal par la corrélation tonale.

17. Décodeur audio selon la revendication 16, dans lequel la au moins une couche apprenable de préconditionnement (710) est configurée pour dériver les données cibles (12) au moins par la convolution de la multiplication du délai tonal par la corrélation tonale et la donnée d'enveloppe spectrale.

18. Décodeur audio selon l'une quelconque des revendications 1-15, dans lequel la au moins une couche apprenable de préconditionnement (710) est configurée pour dériver les données cibles (12) au moins par la convolution du délai tonal, de la corrélation tonale et de la donnée d'enveloppe spectrale.

19. Décodeur audio selon l'une quelconque des revendications précédentes, dans lequel la au moins une couche apprenable de préconditionnement (710) est configurée pour dériver les données cibles (12) de coefficients LPC (3a, 3b), de coefficients basés sur un spectrogramme et/ou de coefficients basés sur un cepstre obtenus à partir du train de bits (3).

20. Décodeur audio selon l'une quelconque des revendications précédentes, dans lequel les données cibles (12) sont une carte de convolution, et la au moins une couche apprenable de préconditionnement (710) est configurée pour effectuer une convolution sur la carte de convolution.

21. Décodeur audio selon la revendication 20, dans lequel les données cibles (12) incluent des données de cepstre (3a) du signal audio (16) dans la trame donnée.

22. Décodeur audio selon l'une quelconque des revendications précédentes, dans lequel le signal d'entrée est obtenu à partir d'au moins des données de corrélation du signal audio (16) dans la trame donnée.

23. Décodeur audio selon l'une quelconque des revendications précédentes, dans lequel les données cibles sont obtenues à partir de données tonales du signal audio (16) dans la trame donnée.

24. Décodeur audio selon l'une quelconque des revendications précédentes, dans lequel les données cibles incluent une valeur multipliée obtenue en multipliant les données tonales du signal audio (16) dans la trame donnée et les données de corrélation du signal audio dans la trame donnée.

**25.** Décodeur audio selon l'une quelconque des revendications précédentes, dans lequel la au moins une couche apprenable de préconditionnement (710) est configurée pour effectuer au moins une convolution sur un modèle de train de bits obtenu en juxtaposant au moins une donnée de cepstre obtenue à partir du train de bits, ou une version traitée de celle-ci.

**26.** Décodeur audio selon l'une quelconque des revendications précédentes, dans lequel la au moins une couche apprenable de préconditionnement (710) est configurée pour effectuer au moins une convolution sur un modèle de train de bits obtenu en juxtaposant au moins un paramètre obtenu à partir du train de bits.

**27.** Décodeur audio selon l'une quelconque des revendications précédentes, dans lequel la au moins une couche apprenable de préconditionnement (710) est configurée pour effectuer au moins une convolution sur une carte de convolution (712, 716, 720, 724, 816, 820, 824, 813, 856) obtenue à partir du train de bits (3), ou une version traitée de celle-ci.

**28.** Décodeur audio selon la revendication 27, dans lequel la carte de convolution est obtenue en juxtaposant des paramètres associés à des trames suivantes.

**29.** Décodeur audio selon l'une quelconque des revendications précédentes, dans lequel le premier fournisseur de données est configuré pour effectuer une convolution sur un modèle de train de bits obtenu en juxtaposant un ensemble de paramètres codés obtenus à partir de la trame donnée du train de bits adjacent à la trame immédiatement précédente du train de bits.

**30.** Décodeur audio selon l'une quelconque des revendications précédentes, dans lequel l'ensemble de couches apprenables de conditionnement comprend une ou au moins deux couches de convolution (71-73).

**31.** Décodeur audio selon l'une quelconque des revendications précédentes, dans lequel une première couche de convolution (71-73) est configurée pour convoluter les données cibles (12) ou données cibles suréchantillonnées pour obtenir des premières données convolutées (71') en utilisant une première fonction d'activation.

**32.** Décodeur audio selon l'une quelconque des revendications précédentes, dans lequel l'ensemble de couches apprenables de conditionnement (71-73) et l'élément de stylisation (77) font partie d'une couche de poids dans un bloc résiduel (50, 50a-50h) d'un réseau neuronal comprenant un ou plusieurs blocs résiduels (50, 50a-50h).

**33.** Décodeur audio selon l'une quelconque des revendications précédentes, dans lequel les données cibles (12) sont suréchantillonnées par un facteur d'une puissance de 2.

**34.** Décodeur audio selon la revendication 33, dans lequel les données cibles (12) sont suréchantillonnées (70) par une interpolation non linéaire.

**35.** Décodeur audio selon l'une quelconque des revendications précédentes, dans lequel des opérations de convolution (61b, 62b) sont exécutées avec un facteur de dilatation maximum de 2.

**36.** Décodeur audio selon l'une quelconque des revendications précédentes, comprenant huit premiers blocs de traitement (50a-50h) et un second bloc de traitement (45).

**37.** Procédé de décodage d'un signal audio (1, 16) à partir d'un train de bits (3) représentant le signal audio (16), le procédé utilisant un signal d'entrée (14), le signal audio (1, 16) étant subdivisé en une pluralité de trames, le procédé comprenant le fait de :

à partir du train de bits (3), obtenir des données cibles (15) pour une trame donnée, par au moins une couche de préconditionnement (710) d'un premier bloc de traitement (40), les données cibles (15) représentant le signal audio (16) et présentant deux dimensions ;
recevoir, par le premier bloc de traitement (40, 50, 50a-50h) et pour chaque échantillon de la trame donnée, des premières données (12) dérivées du signal d'entrée (14) ;

traiter, par un ensemble de couches apprenables de conditionnement (71, 72, 73) du premier bloc de traitement (40, 50), les données cibles (12) pour obtenir des paramètres de caractéristique de conditionnement (74, 75) ; et

appliquer, par un élément de stylisation (77) du premier bloc de traitement (50), les paramètres de caractéristique de conditionnement (74, 75) aux premières données (15, 59) ou à des premières données normalisées (76') ;

délivrer en sortie, par le premier bloc de traitement (40, 50), des premières données de sortie (69) comprenant une pluralité de canaux (47) ;

recevoir, par un second bloc de traitement (45), en tant que secondes données, les premières données de sortie (69) ou des données dérivées des premières données de sortie (69) ; et

combiner, par le second bloc de traitement (45), la pluralité de canaux (47) des secondes données pour obtenir le signal audio (16),

**caractérisé en ce que** le premier bloc de traitement (40, 50) est configuré pour suréchantillonner les premières données (15) depuis un premier nombre d'échantillons pour la trame donnée à un deuxième nombre d'échantillons pour la trame donnée supérieur au premier nombre d'échantillons.

Fig. 1

Fig. 2b

Fig. 2a

Fig. 3

| | | samples 49 | channels 47 |
|---|---|---|---|
| | | 1 | 128 |

12 (target data or bitstream 3)

14 (input signal)

conditioning input

prior/latent noise

| | | | samples | channels |
|---|---|---|---|---|
| | | | 1 | x |
| 30 | channel mapping | | 1 | 64 |
| 50a | TADEResBlock upsample x 2 | | 2 | 64 |
| 50b | TADEResBlock upsample x 2.5 | | 5 | 64 |
| 50c | TADEResBlock upsample x 2 | | 10 | 64 |
| 50d | TADEResBlock upsample x 2 | | 20 | 64 |
| 50e | TADEResBlock upsample x 2 | | 40 | 64 |
| 50f | TADEResBlock | | 40 | 64 |
| 50g | TADEResBlock | | 40 | 64 |
| 50h | TADEResBlock | | 40 | 64 |
| 42 | TADEResBlock | | 40 | 64 |
| 44 | conv kernel size: 9 | | 40 | 4 |
| 46 | tanh | | | |

40 (50) first processing block

45 second processing block

44'

11 GAN generator

10 audio decoder (audio generator) (e.g. 1120)

PQMF synthesis ~110

speech ~ output audio signal 16

10 decoder (generator)

Fig. 4

Fig. 5a

average and 95% confidence intervals

1. speex 4kbps    2. lyra 3kbps    3. ipcnet 1.6kbps    4. amr_wb 6.6kbps

5. evs 5.9kbps    6. Ssmagan 1.6kbps inventive    7. hiddenRef

EP 4 330 962 B1

Fig. 5b

average and 95% confidence intervals

EP 4 330 962 B1

average and 95% confidence intervals

Fig. 6a

EP 4 330 962 B1

average and 95% confidence intervals

Fig. 6b

EP 4 330 962 B1

(input) noise
(or other external signal)
second option

14
(input)

702

(input) pitch data
first option

3
bitstream

first data
provisioner

(3a, filter data,
spectral
envelope data)

frame
by frame

3 (3b)

3

sample
by sample

15

first data
(input signal,
latent, prior)

preconditioning
(e.g. learnable)
layer(s)

710

10b'

target data (target frame)
(e.g. mel-spectrogram)
(conditioning input)

12

77

conditioning
learnable
layer(s)

71, 72, 73

β, γ

(74, 75)

denormalization
(styling element)

40 (50)
first
processing
block

first output data

69

10a'

10

45
second
processing
block

combining
the plurality
of channels

16

output audio signal

## Fig. 7

Fig. 7a

(input) noise
(or other external signal)

14 ⌇     ⌇ 702

3
bitstream
(e.g. text 112 or
part(s) of text 112)

first data
provisioner

3 (112) ⌇

frame
by frame

sample
by sample ⌇

15 ⌇

first data
(input signal,
latent, prior)

preconditioning
learnable or
deterministic layer(s)     ⌇ 710b

10b' ⌇

target data (target frame)
(e.g. mel-spectrogram)
(conditioning input)

12 ⌇

⌇ 71, 72, 73

conditioning
learnable
layer(s)

β, γ

⌇

(74, 75)

77
⌇

denormalization
(styling element)

40 (50)
first
processing
block

first output data

⌇ 69

10a'

10b

45
second
processing
block

combining
the plurality
of channels

⌇ 16

output audio signal

Fig. 7b

Fig. 8a

bitstream 3

pitch_embedding    norm_corr

pitch data 3b
(other data)

$\times$    812

813

MFCC

3a

filter data
(spectral
envelope data)

parameters
of the
bitstream 3

816    precond_conv1

818    precond_out

820    precond_conv2

822    precond_out

824    precond_dense

preconditioning
learnable
layer(s)
710

target data 12

precond_out

input signal 14
gaussian noise
(prior)

first
data
15

71-73, 77    generator_network    770

first output data 69    multiband_waveforms

second
processing
block 45

PQMF synthesis    110

output audio
signal 16

out_frame

"pitch enforcement"

800

Fig. 8b

bitstream
3

MFCC

pitch_embedding

pitch_corr

filter data
(e.g. spectral
envelope
data)

3a

856

pitch data
3b

preconditioning
learnable layer(s)

710

precond_conv

812

⊗

target data 12

858

813

input data 14
first data 15

71-73, 77

generator_network

770

first output data 69

multiband_waveforms

second
processing
block 45

PQMF synthesis

110

output audio
signal 16

out_frame

850

Fig. 8c

Fig. 9

multiple random windows

104
or
16

105a
105b
105c
105d

105a    105b    105c    105d

PQMF

110

subbands

120

channels

conv
kernel size: 15          16          131

DBlock
downsample x 4          64          132a

DBlock
downsample x 4          256         132b

DBlock
downsample x 4          512         132c

DBlock                  512         132d

132

130

conv
kernel size: 3           1          134

adversarial loss          140

100

Fig. 10

text

↓ ~112

| 1110 { | text analysis | ~1112 |

bitstream 3
(e.g. linguistic features)

710c~ | preconditioning layer(s) | (learnable or deterministic) e.g. acoustic model

input signal
(e.g. noise,
external signal,
pitch data, etc.)

1120 {

target data 12
(e.g. acoustic features,
e.g. spectrogram(s))

| waveform synthesis (vocoder) | ~702, 71-73, 77, 45

14

~16

output audio signal

10 (10c)

## Fig. 11a

text
(bitstream 3)

⌇—112

1110 { | text analysis |

preconditioning
(learnable or
deterministic)
layer 710b

target data 12
(e.g. acoustic features)

input signal (e.g. noise)

14

1120 — | waveform synthesis
(vocoder) |

⌇—702, 71-73, 77, 45

⌇—16

output audio signal

10 (10b)

Fig. 11b

preconditioning learnable
or deterministic layer
(e.g. 710, 710b, 710c...)

input:
bitstream 3

|  | bitstream is plain text | bitstream is linguistic feature | bitstream is acoustic feature |
|---|---|---|---|
| target data is plain text | A | NO | NO |
| target data is linguistic feature | B | D | NO |
| target data is acoustic feature | C | E | F |

output:
target data

12

Fig. 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2021074308 A1

**Non-patent literature cited in the description**

- **A. VAN DEN OORD** ; **S. DIELEMAN** ; **H. ZEN** ; **K. SIMONYAN et al.** WaveNet: A Generative Model for Raw Audio. *arXiv:1609.03499*, 2016
- **R. PRENGER** ; **R. VALLE** ; **B. CATANZARO**. Waveglow: A Flow-based Generative Network for Speech Synthesis. *IEEE International Conference on Acoustics, Speech and Signal Processing (ICASSP)*, 2019, 3617-3621
- **N. KALCHBRENNER** ; **E. ELSEN** ; **K. SIMONYAN** ; **S. NOURY et al.** Ef-ficient neural audio synthesis. *arXiv:1802.08435*, 2018
- **J. VALIN** ; **J. SKOGLUND**. LPCNET: Improving Neural Speech Synthesis through Linear Prediction. *IEEE Inter-national Conference on Acoustics, Speech and Signal Processing (ICASSP)*, 2019, 5891-5895
- **K. KUMAR** ; **R. KUMAR** ; **DE T. BOISSIERE** ; **L. GESTIN et al.** MelGAN: Generative Adversarial Networks for Conditional Waveform Synthesis. *Advances in NeurIPS*, 2019, vol. 32, 14 910-14 921
- **W. B. KLEIJN** ; **F. S. C. LIM** ; **A. LUEBS** ; **J. SKOGLUND** ; **F. STIMBERG** ; **Q. WANG** ; **T. C. WALTERS**. Wavenet based low rate speech coding. *2018 IEEE International Conference on Acoustics, Speech and Signal Processing (ICASSP)*, 2018, 676-680

- **J.-M. VALIN** ; **J. SKOGLUND**. *A real-time wideband neural vocoder at 1.6 kb/s using lpcnet*, 2019
- **J. KLEJSA** ; **P. HEDELIN** ; **C. ZHOU** ; **R. FEJGIN** ; **L. VILLEMOES**. High-quality speech coding with sample rnn. *ICASSP 2019 - 2019 IEEE International Conference on Acoustics, Speech and Signal Processing (ICASSP)*, 2019, 7155-7159
- **W. B. KLEIJN** ; **A. STORUS** ; **M. CHINEN** ; **T. DENTON** ; **F. S. C. LIM** ; **A. LUEBS** ; **J. SKOGLUND** ; **H. YEH**. *Generative speech coding with predictive variance regularization*, 2021
- **A. MUSTAFA** ; **N. PIA** ; **G. FUCHS**. *Stylemelgan: An efficient high-fidelity adversarial vocoder with temporal adaptive normalization*, 2021
- **O. RYBAKOV** ; **N. KONONENKO** ; **N. SUBRAHMA-NYA** ; **M. VISONTAI** ; **S. LAURENZO**. *Streaming keyword spotting on mobile de-vices*, 2020
- **C. YU** ; **H. LU** ; **N. HU** ; **M. YU** ; **C. WENG** ; **K. XU** ; **P. LIU** ; **D. TUO** ; **S. KANG** ; **G. LEI**. *Durian: Duration informed attention network for multimodal synthesis*, 2019
- **G. YANG** ; **S. YANG** ; **K. LIU** ; **P. FANG** ; **W. CHEN** ; **L. XIE**. *Multi-band melgan: Faster waveform generation for high-quality text-to-speech*, 2020